# FASCICULE DE BREVET EUROPEEN

(11) **EP 2 939 295 B1**
(45) Date de publication et mention de la délivrance du brevet: **31.10.2018**
(21) Numéro de dépôt: 13820845.9
(22) Date de dépôt: 31.12.2013
(51) Int. Cl.: H01M 4/04, H01M 4/139, H01M 10/04, H01M 10/052, H01M 10/0562, H01M 10/0585, C25D 13/02

(54) **PROCEDE DE FABRICATION DE BATTERIES TOUT SOLIDE EN STRUCTURE MULTICOUCHES**
VERFAHREN ZUR HERSTELLUNG VON KOMPLETTFESTSTOFFBATTERIEN IN EINER MEHRSCHICHTIGEN STRUKTUR
METHOD FOR MANUFACTURING ALL-SOLID-STATE BATTERIES IN A MULTILAYER STRUCTURE

(30) Priorité: 31.12.2012 FR 1262967
(43) Date de publication de la demande: 04.11.2015
(73) Titulaire: I-TEN, 69570 Dardilly (FR)
(72) Inventeur: GABEN, Fabien, 69130 Ecully (FR)
(74) Mandataire: Schmidt, Martin Peter
(86) Numéro de dépôt international: PCT/FR2013/053289
(87) Numéro de publication internationale: WO 2014/102520

(56) Documents cités:
- EP-A1- 2 037 527
- WO-A1-2012/076950
- US-A1- 2007 184 345
- US-A1- 2010 216 032

## Description

### Domaine de l'invention

La présente invention se rapporte au domaine des batteries et notamment des batteries à ions de lithium. Elle concerne plus particulièrement les batteries à ions de lithium entièrement solides, et un nouveau procédé de fabrication de telles batteries.

### Etat de la technique

Les modes de fabrication des batteries à ions de lithium (« batteries Li-ion ») sont présentés dans de nombreux articles et brevets, et l'ouvrage « Advances in Lithium-Ion Batteries » (ed. W. van Schalkwijk et B. Scrosati), paru en 2002 (Kluever Academic / Plenum Publishers) en donne un bon état des lieux. Les électrodes des batteries Li-ion peuvent être fabriquées à l'aide de techniques d'impression (notamment : roll coating, doctor blade, tape casting). Ces techniques permettent de réaliser des dépôts d'épaisseurs comprises entre 50 et 400 µm. En fonction de l'épaisseur des dépôts, de leurs porosités et de la taille des particules actives, la puissance et énergie de la batterie peuvent être modulées. Les encres (ou pâtes) déposées pour former les électrodes contiennent des particules de matériaux actifs, mais également des liants (organiques), de la poudre de carbone permettant d'assurer le contact électrique entre les particules, et des solvants qui sont évaporés lors de l'étape de séchage des électrodes. Pour améliorer la qualité des contacts électriques entre les particules et compacter les dépôts, une étape de calandrage est réalisée sur les électrodes, à la suite de laquelle les particules actives des électrodes occupent environ 60% du volume du dépôt, ce qui signifie qu'il reste généralement 40% de porosités entre les particules. Ces porosités sont ensuite remplies par un électrolyte liquide ou gélifié, pouvant comporter des particules solides conductrices ioniques et/ou électriques.

D'autres architectures de batteries lithium-ion ont cependant été développées pour les applications de micro stockage de l'énergie électrique. Il s'agit des micro-batteries en couches minces. Pour satisfaire aux exigences de miniaturisation et de tenue en température, ces micro-batteries sont entièrement solides, sans liants, ni électrolytes à base de sels de lithium et dotées d'électrodes de très fines épaisseurs, de l'ordre de 2 à 5 microns. De telles cellules de batteries en couches minces présentent d'excellentes densités d'énergie massique et volumique. En effet, leurs électrodes sont entièrement solides, sans porosités et donc totalement compactes. Les couches d'électrolytes déposées sur les électrodes sont constituées de matériaux céramiques ou vitrocéramiques très isolants, pouvant être déposées en très fines épaisseurs sans induire de risques de courts-circuits ou d'autodécharge trop rapide.

Cette architecture de cellule batterie, sans liants, ni électrolytes à base de sels de lithium, totalement solide et sans porosité permet de maximiser la quantité de matière active par unité de volume, matérialisée par un accroissement des densités d'énergie massiques et volumiques.

Afin d'éviter que ces cellules ne soient trop résistives, les électrodes doivent rester minces, et leur épaisseur est de préférence inférieure à 5 microns, ou les électrodes doivent comprendre des phases conductrices des ions lithium et/ou des électrons co-déposées avec les phases de matière active. Pour réaliser ces électrodes en couches minces, plusieurs techniques ont été décrites.

La technique de dépôt chimique par phase vapeur (ou « chemical vapor deposition ») est couramment utilisée pour la fabrication de couches minces dans le domaine de l'électronique. Cette technique, ainsi que toutes ses variantes, permettent d'obtenir des couches minces d'électrodes de bonne qualité, sans porosités. De la même manière, les techniques de dépôt par voie physique peuvent être utilisées.

Les techniques de « thermal spray technology » sont plutôt adaptées à la fabrication de dépôts relativement épais, alors que les techniques de dépôt par voie physique sont plutôt adaptées pour la réalisation de couches minces, d'épaisseurs inférieures à 5 microns. Les techniques de dépôt par voie physique regroupent plusieurs variantes en fonction des modes de pulvérisation. La vaporisation des composés à déposer peut être réalisée par des excitations à des radio fréquences (RF), ou bien assistée par faisceau d'ions (IBAD). Les techniques de dépôt voie physique permettent d'obtenir des dépôts de très bonne qualité, ne contenant quasiment pas de défauts ponctuels, et permettent de réaliser des dépôts à des températures relativement faibles.

Les autres technologies actuellement disponibles pour réaliser des couches minces comprennent des modes de réalisation basés sur la densification de dépôts de particules. Parmi ces techniques, on peut citer la réalisation de dépôts par voie sol-gel. Cette technique consiste à déposer sur la surface d'un substrat un réseau polymérique obtenu après des étapes d'hydrolyse, polymérisation et condensation. La transition sol-gel apparait durant l'évaporation du solvant qui accélère les processus réactionnel en surface. Cette technique permet de réaliser des dépôts compacts de très faible épaisseur. Une autre technique susceptible d'être mise en oeuvre pour la réalisation de dépôts en couche mince entièrement solide, consiste à déposer des poudres dematériaux constituant l'électrode sous forme de feuille céramique verte et de densifier ce dépôt à l'aide d'un traitement thermomécanique approprié.

Ces architectures de batteries entièrement solides en couches minces présentent de nombreux avantages par rapport aux batteries Li-ion "conventionnelles". Les risques de court-circuit internes et d'emballement thermique sont quasiment éliminés du fait que la couche d'électrolyte ne contient plus d'éléments organiques combustibles, ni porosités dans lesquelles des sels métalliques seraient susceptibles de précipiter (plus particulièrement les ions lithium contenus dans les électrolytes liquides).

Outre le risque de court-circuit, les performances des batteries conventionnelles, contenant des électrolytes aprotiques avec des sels de lithium, sont très dépendantes de la température, si bien que leur utilisation dans des conditions extrêmes devient très difficile voire impossible.

En effet, ces batteries ont des électrodes épaisses, et les électrolytes imprégnés dans les porosités des électrodes contribuent à accélérer le transport des ions lithium dans l'épaisseur des électrodes, la diffusion des ions lithium dans les phases solides (particules actives) étant beaucoup plus lente que le transport des ions lithium dans l'électrolyte liquide.

Cependant, la cinétique de transport des ions lithium dans les électrolytes et leur stabilité dépend de la température. Une température de fonctionnement trop faible peut donner lieu à la précipitation des sels de lithium dans l'électrolyte et à un accroissement trop important de la résistance interne de la batterie du fait de la diminution des propriétés de conduction ionique.

Pour les températures très élevées, les matériaux organiques se dégradent rapidement, les solvants organiques sont susceptibles de s'évaporer, les couches de passivation sur les électrolytes peuvent également se dissoudre dans un processus exothermique. Tous ces phénomènes conduisent à la détérioration irréversible de la batterie pouvant aller jusqu'à l'apparition de phénomènes de combustion de la cellule.

Bien que présentant de nombreux inconvénients, les électrolytes sous forme de liquides aprotiques contenant des sels de lithium permettent d'assembler des empilements de cellules batteries afin de réaliser des batteries de fortes capacités. En effet, ces électrolytes liquides, servent à réaliser assez simplement une mise en contact ionique des électrodes de batteries pour en faire des cellules électrochimiques.

Les électrodes des batteries, poreuses, sont alors empilées ou spiralées et les anodes et cathodes sont séparées par un séparateur poreux. Les connections électriques sont alors réalisées en connectant les collecteurs d'anode entre-eux et les collecteurs de cathode entre eux. La conduction ionique entre les anodes et cathodes étant alors assurée par l'imprégnation de l'électrolyte liquide dans les porosités de la cellule de la batterie (i.e. dans les porosités des électrodes et du séparateur situé entre les électrodes).

Lorsque l'on utilise des électrodes (et/ou électrolyte) totalement solides, sans porosités, cette mise en contact devient presque impossible à réaliser car les contacts mécaniques entre deux solides ne sont pas suffisamment "intimes" en comparaison d'un contact liquide/solide pour assurer un bon transfert des ions à cette interface.

Aussi, les batteries en couches minces sont actuellement constituées d'une cellule élémentaire avec par conséquent une structure planaire. Elles sont constituées d'un seul empilement cathode/électrolyte/anode réalisé par déposition successive de chacune de ces couches, elles ne peuvent pas être assemblées pour réaliser une cellule tout solide multicouche, sous forme d'un composant monobloc. De telles batteries sont connues des documents WO2012/076950 et US2007/0184345.

Seules des connections électriques en parallèles de plusieurs cellules indépendantes peuvent être réalisées.

### Objets de l'invention

La présente invention a pour objet un procédé de fabrication de batteries entièrement solides, lesdites batteries comprenant au moins une couche contenant des matériaux d'anode (« couche d'anode »), au moins une couche contenant des matériaux d'électrolyte solide (« couche d'électrolyte »), et au moins une couche contenant des matériaux de cathode (« couche de cathode »), chacune de ces trois couches étant déposée par électrophorèse, procédé dans lequel on empile face sur face deux couches obtenues par électrophorèse pour obtenir une batterie entièrement solide multicouches constituée d'un assemblage de plusieurs cellules élémentaires connectées entre elles en parallèle, ledit procédé étant caractérisé en ce qu'avant l'empilement face sur face desdites couches obtenues par électrophorèse on dépose une couche de matériau de liaison Ms sur la face d'au moins une desdites deux couches obtenues par électrophorèse qui seront empilées face sur face ; lesdites couches sur lesquelles on dépose ledit matériau de liaison Ms sont des couches denses.

La couche de matériau de liaison Ms doit être un bon conducteur d'ions lithium.

Le point de fusion de la couche de matériau de liaison Ms telle que déposée doit être inférieur à celui des couches avec lequel il est en contact.

Le matériau de liaison Ms peut être le même que le matériau d'au moins une couche avec lequel il est en contact, ou il peut être différent. S'il est le même, et avantageusement en tous les cas, la couche de matériau de liaison Ms comprend de préférence des particules de taille nanométrique.

Ce procédé comprend plus particulièrement les étapes successives suivantes :
a) on dépose une couche d'anode et une couche de cathode chacune sur son substrat conducteur, de préférence une feuille ou bande métallique ou feuille ou bande ou film isolant métallisé, lesdits substrats conducteurs, ou leurs éléments conducteurs, pouvant servir comme collecteur de courant anodique et cathodique respectivement ;
b) on dépose une couche d'électrolyte solide sur au moins une des deux couches obtenues à l'étape a) ;
c) on dépose une couche de matériau de liaison Ms sur l'une au moins des couches obtenues à l'étape a) et/ou b) ;
d) on empile face sur face la couche obtenue à l'étape c) avec une couche obtenue à l'étape a), b) ou c) pour obtenir un empilement, et on effectue un traitement thermique et/ou une compression mécanique favorisant le contact entre lesdites deux couches empilées face sur face pour obtenir un assemblage multicouches entièrement solide et monobloc de cellules élémentaires, pouvant fonctionner comme une batterie.

De préférence, le dépôt de la couche d'anode et de cathode est réalisé sur les deux faces de leur substrat conducteur respectif.

Le dépôt de la couche de matériau de liaison Ms peut être réalisé parmi l'une des techniques suivantes :
i. technique de dépôt sous vide, et plus particulièrement par dépôt physique par phase vapeur, dépôt chimique par phase vapeur, ou dépôt chimique en phase vapeur assisté par plasma ;
ii. technique de dépôt de type sol-gel ;
iii. technique de dépôt de nanoparticules en suspension, plus particulièrement techniques d'encrage, de trempé, de centrifugation (spin-coating), Langmuir-Blodgett ;
iv. technique d'électropulvérisation (« electrospraying ») ;
v. technique de dépôt par aérosol ; ou
vi. technique de dépôt par électrophorèse.

Selon un mode de réalisation particulier, les couches déposées par électrophorèse obtenues à l'étape a), b) et c) peuvent être densifiées avant l'étape d) par traitement thermique et/ou par compression mécanique lorsque lesdites couches ne sont pas susceptibles d'être directement denses et compactes après leur dépôt. Avantageusement, lorsque on réalise un dépôt d'une couche d'électrolyte solide sur au moins une des deux couches obtenues à l'étape a), l'épaisseur de la couche de matériau de liaison Ms obtenue à l'étape c) est inférieure à 100 nm, de préférence inférieure à 50 nm, et encore plus préférentiellement inférieure à 30 nm.

Dans un mode de réalisation préférentiel, la compression mécanique de l'empilement de l'étape d) est réalisée à une pression comprise entre 10 et 100 MPa, de préférence entre 20 et 50 MPa. De même, le traitement thermique de l'étape d) est réalisé avantageusement à une température T_{R} qui, de préférence, ne dépasse pas 0,7 fois la température de fusion ou de décomposition (exprimée en °C), et plus préférentiellement ne dépasse pas 0,5 fois (et encore plus préférentiellement ne dépasse pas 0,3 fois) la température de fusion ou de décomposition (exprimée en °C) du au moins un matériau de liaison Ms le plus fusible soumis à ladite étape de densification thermique.

Le matériau de liaison Ms est choisi parmi un ou plusieurs des matériaux suivants :
a) les matériaux à base d'oxydes choisis parmi Li_{3,6}Ge_{0,6}V_{0,4}O₄ ; Li₂O-Nb₂O₅ ; LiSiO₄ ; Li₂O ; Li₁₄Zn(GeO₄)₄ ; Li_{0,35}La_{0,55}TiO₃ ; Li_{0,5}La_{0,5}TiO₃; Li₇La₃Zr₂O₁₂ ; Li₅₊ₓLa₃(Zrₓ,A₂₋ₓ)O₁₂ avec A=Sc, Ti, V, Y, Nb, Hf, Ta, Al, Si, Ga, Ge, Sn et 1,4 ≤ x ≤ 2 ;
b) les matériaux à base de nitrures ou d'oxynitrures choisis parmi Li₃N; Li₃PO₄₋ₓN_{2x/3}, Li₄SiO₄₋ₓN_{2x/3}, Li₄GeO₄₋ₓN_{2x/3} avec 0 < x < 4 ou Li₃BO₃₋ₓN_{2x/3} avec 0 < x < 3 ; les matériaux à base d'oxynitrures de lithium et de phosphore (appelés LiPON) pouvant également contenir du silicium (appelés LiSiPON), du bore (appelés LiPONB), du soufre (appelés LiPONS) ou de l'aluminium (appelés LiPAON) ou une combinaison d'aluminium, bore, soufre et/ou silicium ; les matériaux à base d'oxynitrures de lithium et de bore (appelés LiBON) pouvant également contenir du silicium (appelés LiSiBON), du soufre (appelés LiBONS) ou de l'aluminium (appelés LiBAON) ou une combinaison d'aluminium, soufre et silicium ; et plus particulièrement les matériaux du type LiₓPO_{y}N_{z} avec x ∼2,8 et 2y = 3z avec 0,16 ≤ z ≤ 0,46 ; ou Li_{w}POₓN_{y}S_{z} avec (2x+3y+2z) = (5+w) et 3,2 ≤ x ≤ 3,8 ; 0,13 ≤ y ≤ 0,4 ; 0 ≤ z ≤ 0,2 ; 2,9 ≤ w ≤ 3,3 ; ou LiₜPₓAl_{y}OᵤNᵥS_{w} avec (5x+3y) =5 ; (2u+3v+2w) = (5+t) ; 2,9≤ t ≤3,3 ; 0,84≤ x ≤0,94 ; 0,094≤ y ≤0,26 ; 3,2≤ u ≤3,8 ; 0,13≤ v ≤0,46 ; 0≤ w ≤0,2 ; ou Li_{1,9}Si_{0,2}P_{1,0}O_{1,1}N_{1,0} ; ou Li_{2,9}PO_{3,3}N_{0,46} ;
c) les matériaux à base de sulfure choisis parmi: LiₓM_{1-y}M'_{y}S₄ avec M=Si, Ge, Sn et M'=P, Al, Zn, Ga, Sb ; Li₂S ; B₂S₃ ; P₂S₅ ; 70Li₂S-30P₂S₅ ; Li₇P₃S₁₁ ; Li₁₀GeP₂S₁₂ ; Li₇PS₆ ; Li_{3,25}Ge_{0,25}P_{0,75}S₄ ; Li₁₀MP₂S₁₂ avec M = Si, Ge, Sn et les mélanges entre Li₂S et un des composés parmi P₂S₅, GeS₂, Ga₂S₃ ou SiS₂ ;
d) les matériaux à base de phosphate ou de borate choisis parmi Li₃PO₄ ; LiTi(PO₄)₃ ; Li₁₊ₓAlₓM₂₋ₓ(PO₄)₃ (ou M = Ge, Ti, et/ou Hf et où 0 < x < 1) ; Li_{1,3}Al_{0,3}Ti_{1,7}(PO₄)₃ ; Li_{1+x+y}AlₓTi₂₋ₓSi_{y}P_{3-y}O₁₂ (où 0 ≤ x ≤ 1 et 0 ≤ y ≤ 1) ; Li_{1+x+z}Mx(Ge_{1-y}Ti_{y})₂₋ₓSi_{z}P_{3-z}O₁₂ (où 0 ≤ x ≤ 0,8, 0 ≤ y ≤ 1,0, 0 ≤ z ≤ 0,6) ; 2(Li_{1,4}Ti₂Si_{0,4}P_{2,6}O₁₂)-AlPO₄ ; LiₓAl_{z-y}Ga_{y}S_{w}(PO₄)_{c} ou LiₓAl_{z-y}Ga_{y}S_{w}(BO₃)_{c} ou LiₓGe_{z-y}Si_{y}S_{w}(PO₄)_{c} ou LiₓGe_{z-y}Si_{y}S_{w}(BO₃)_{c} ou d'une manière plus générale LiₓM_{z-y}M'_{y}S_{w}(PO₄)_{c} ou LiₓM_{z-y}M'_{y}S_{w}(BO₃)_{c} avec 4 < w < 20, 3 < x <10, 0 ≤ y ≤ 1, 1 ≤ z ≤ 4 et 0 < c < 20 et M ou M' un élément parmi Al, Si, Ge, Ga, P, Zn, Sb ;
e) les matériaux mixtes choisis parmi choisis parmi les mélanges entre Li₂S et un des composés parmi Li₃PO₄, Li₃PO₄₋ₓN_{2x/3}, Li₄SiO₄₋ₓN_{2x/3}, Li₄GeO₄₋ₓN_{2x/3} avec 0 < x < 4 ou Li₃BO₃₋ₓN_{2x/3} avec 0 < x < 3 ; les mélanges entre soit Li₂S et/ou B₂S₃, SiS₂, P₂S₅, GeS₂, Ga₂S₃ et un composé du type LiₐMO_{b} qui peut être soit un silicate de lithium Li₄SiO₄, un borate de lithium Li₃BO₃ ou un phosphate de lithium Li₃PO₄.

D'une manière générale, les tailles D₅₀ des particules de matériau de liaison Ms sont de préférence inférieures à 100 nm, de préférence inférieures à 50 nm, et encore plus préférentiellement inférieures à 30 nm.

Avantageusement, le matériau de liaison Ms comporte au moins un (ou est constitué d'au moins un) polymère imprégné d'un sel de lithium, le polymère étant de préférence choisi dans le groupe formé par le polyéthylène oxyde, les polyimides, le polyfluorure de vinylidène, le polyacrylonitrile, le polyméthacrylate de méthyle, les polysiloxanes, et le sel de lithium étant de préférence choisi parmi LiCl, LiBr, Lil, Li(ClO₄), Li(BF₄), Li(PF₆), Li(AsF₆), Li(CH₃CO₂), Li(CF₃SO₃), Li(CF₃SO₂)₂N, Li(CF₃SO₂)₃, Li(CF₃CO₂), Li(B(C₆H₅)₄), Li(SCN), Li(NO₃).

Un autre objet de l'invention concerne un procédé de fabrication de batteries entièrement solides, lesdites batteries comprenant au moins une couche contenant des matériaux d'anode (« couche d'anode »), au moins une couche contenant des matériaux d'électrolyte solide (« couche d'électrolyte »), et au moins une couche contenant des matériaux de cathode (« couche de cathode »), chacune de ces trois couches étant déposée par électrophorèse, ledit procédé comprenant les étapes successives suivantes :
a) on dépose, dans un ordre arbitraire, une couche d'anode et une couche de cathode chacune sur son substrat conducteur, de préférence une feuille ou bande métallique ou feuille ou bande ou film isolant métallisé, lesdits substrats conducteurs, ou leurs éléments conducteurs, pouvant servir comme collecteur de courant anodique et cathodique respectivement ;
b) on dépose une couche d'électrolyte solide, à partir d'une suspension de particules de matériau d'électrolyte, sur ladite couche d'anode et/ou ladite couche de cathode obtenue(s) à l'étape a);
c) on dépose une couche de matériau de liaison Ms soit :
   i. sur la face de la couche d'anode ou de cathode obtenue à l'étape a) ; ou
   ii. sur la face de la couche d'anode et/ou de cathode revêtues d'une couche d'électrolyte obtenues à l'étape b) ; ou
   iii. sur la face de la couche d'anode revêtue d'une couche d'électrolyte obtenue à l'étape b) et sur la face de la couche de cathode obtenue à l'étape a) ; ou sur la face de la couche d'anode obtenue à l'étape a) et sur la face de la couche de cathode revêtue d'une couche d'électrolyte obtenue à l'étape b) ;
d) on empile face sur face la couche obtenue à l'étape c) avec une couche obtenue à l'étape a), b) ou c) pour obtenir un empilement, et on effectue un traitement thermique et/ou une compression mécanique favorisant le contact entre lesdites deux couches empilées face sur face pour obtenir un assemblage de structure empilé multicouches pouvant fonctionner comme batterie.

Un autre objet de l'invention concerne une batterie entièrement solide susceptible d'être fabriquée par le procédé selon l'invention. Plus particulièrement, la batterie est constituée d'un assemblage de plusieurs cellules élémentaires connectées entre elles en parallèle.

Avantageusement, les substrats conducteurs de courant d'anode de courant de cathode sont des feuilles métalliques, éventuellement revêtues d'un métal noble, ou des feuilles polymères, éventuellement revêtues d'un métal noble, ou des feuilles de graphite, éventuellement revêtues d'un métal noble. Plus particulièrement, les substrats conducteurs de courant d'anode de courant de cathode en feuilles métalliques sont en aluminium ou en cuivre. Plus particulièrement, les substrats conducteurs de courant d'anode de courant de cathode en feuilles de polymères sont sélectionnés parmi les polymères suivants : le polynaphtalate d'éthylène (PEN), polytéréphtalate d'éthylène (PET), le polypropylène (PP), le Téflon® (PTFE), le polyimide (PI), et plus particulièrement le Kapton®.

Avantageusement, le métal noble est sélectionné parmi les métaux suivants : l'or, le platine, le palladium, le vanadium, le cobalt, le nickel, le manganèse, de niobium, le tantale, le chrome, le molybdène, le titane, le palladium, le zirconium, le tungstène ou tout alliage comprenant au moins un de ces métaux.

Dans un mode de réalisation de la batterie selon l'invention, ladite batterie comprend au moins une couche d'encapsulation, de préférence une couche en céramique ou en vitrocéramique. Avantageusement, ladite batterie comprend une deuxième couche d'encapsulation déposée sur ladite première couche d'encapsulation, ladite deuxième couche étant de préférence en polymère siliconé.

Avantageusement, la batterie comprend des terminaisons au niveau où les collecteurs de courant cathodique, respectivement anodique, sont apparents. De préférence, les connexions anodiques et les connexions cathodiques se trouvent sur les côtés opposés de l'empilement. Avantageusement, les terminaisons sont revêtues en outre d'une couche de nickel au contact des cellules électrochimiques, ladite couche de nickel étant revêtue d'une couche d'étain.

De préférence, ladite au moins une couche d'encapsulation revêt quatre des six faces de ladite batterie, les deux autres faces de la batterie étant revêtues par les terminaisons.

### Description des figures

Les figures 1(a), 1(b), 1(c), 1(d), 1(e) et 1(f) montrent les produits pouvant être obtenus selon plusieurs modes de réalisation selon l'invention.
La figure 2 représente un empilement d'une anode et d'une cathode revêtue d'une couche d'électrolyte et d'une couche de matériau de liaison Ms.
La figure 3 représente un assemblage d'une batterie selon un des modes de réalisation de l'invention.
Le diagramme de la figure 4 présente un mode de réalisation typique du procédé de dépôt par électrophorèse.
Les figures 5a et 5b représentent de manière schématique des dispositifs pour la mise en oeuvre du procédé selon l'invention.
Les figures 6 et 7 représentent schématiquement les étapes pour fabriquer une batterie selon deux différents modes de réalisation de l'invention.
La figure 8 représente de manière schématique un film de cathode (à gauche de la figure) et un film d'anode revêtue d'une couche d'électrolyte (à droite de la figure), les deux films comprenant des motifs découpés par poinçonnage. La flèche noire représente l'opération d'empilement alterné des feuilles de cathode et d'anode revêtue d'électrolyte avec leurs motifs découpés superposés en configuration tête bêche.
La figure 9 représente de manière schématique un détail de la superposition des feuilles de cathode et d'anode revêtue d'une couche électrolyte résultant de l'empilement illustré en figure 8.
La figure 10 représente une batterie multicouche susceptible d'être obtenu par le procédé selon l'invention, selon un mode particulier de réalisation. Plus particulièrement, la batterie multicouche comprend :
   - plusieurs couches de substrat **20** en feuille métallique, ou en feuille métallique revêtue d'un métal noble, ou en feuille polymère métallisé avec un métal noble, ou en feuille de graphite revêtue d'un métal noble ;
   - plusieurs couches d'électrolyte solide **22 ;**
   - plusieurs couches minces d'anodes **21 ;**
   - plusieurs couches minces de cathode **24 ;**
   - plusieurs couches de matériau de liaison Ms (non représentées sur la figure) ;
   - au moins une couche mince d'encapsulation **37** pouvant être constituée soit d'un polymère, soit d'une céramique ou vitrocéramique, pouvant être par exemple sous forme d'oxyde, de nitrure, de phosphates, d'oxynitrure, ou de siloxane. Avantageusement cette couche d'encapsulation comprend une couche de céramique ou vitrocéramique revêtue d'une résine époxy ou de silicone ;
   - des terminaisons **35,36** qui permettent de reprendre les connections électriques alternativement positives et négatives sur chacune des extrémités. Ces terminaisons permettent de réaliser les connections électriques en parallèle entre les différents éléments de batterie. Pour cela, seule les connections (+) sortent sur une extrémité, et les (-) sont disponibles sur les autres extrémités. De manière préférentielle les connections (+) et (-) sont décalées latéralement et l'encapsulation sert de diélectrique pour éviter la présence de court-circuit sur ces extrémités. Les terminaisons **35,36** sont représentées ici comme une double couche mais peut être réalisée comme une couche simple.

### Description détaillée de l'invention

### 1. Définitions

Dans le cadre de la présente invention, on entend par « dépôt électrophorétique » ou « dépôt par électrophorèse » une couche déposée par un procédé de dépôt de particules préalablement mises en suspension dans un milieu liquide, sur un substrat de préférence conducteur, le déplacement des particules vers la surface du substrat étant généré par l'application d'un champ électrique entre deux électrodes placées dans la suspension, l'une des électrodes constituant le substrat conducteur sur lequel le dépôt est effectué, l'autre électrode (« contre-électrode ») étant posée dans la phase liquide. Un dépôt dit « dense » de particules se forme sur le substrat, si le potentiel zêta de la suspension des particules présente une valeur appropriée comme il sera expliqué ci-dessous, et/ou suite à un traitement spécifique de densification de nature thermique et/ou mécanique, comme il sera expliqué ci-dessous. Ce dépôt présente une structure particulière et reconnaissable par l'homme du métier qui le distingue des dépôts obtenus par toute autre technique. Dans le cadre du présent document, la taille d'une particule est sa plus grande dimension. Ainsi, une « nanoparticule » est une particule dont au moins une des dimensions est inférieure à 100 nm. La « taille de particules » ou « taille moyenne de particules » d'une poudre ou d'un ensemble des particules est donnée en D₅₀.

Le « potentiel zêta » d'une suspension est défini comme la différence de potentiel existant entre le sein de la solution, et le plan de cisaillement de la particule. Il est représentatif de la stabilité d'une suspension. Le plan de cisaillement (ou rayon hydrodynamique) correspond à une sphère imaginaire autour de la particule dans laquelle le solvant bouge avec la particule lorsque les particules se déplacent dans la solution. La base théorique et la détermination du potentiel zêta sont connues de l'électrochimiste qui développe des dépôts par électrophorèse ; il peut être déduit de la mobilité électrophorétique. Pour la mesure directe du potentiel zêta, il existe différentes techniques et dispositifs commercialisés. Lorsque l'extrait sec est faible, on peut mesurer le potentiel zêta à l'aide d'un équipement de type Zetasizer Nano ZS de la société Malvern. Cet équipement mesure à l'aide de dispositifs optiques les vitesses de déplacement des particules en fonction du champ électrique qui leur est appliquée. Aussi, il faut que la solution soit très diluée pour permettre le passage de la lumière. Lorsque l'extrait sec est plus important, il est possible de mesurer le potentiel zêta à l'aide de techniques d'acoustophorèse, en utilisant par exemple un dispositif appelé « acoustosizer » de la société Colloidal Dynamics. La vitesse des particules est alors mesurée par des techniques acoustiques.

On entend par « dispersant » un composé apte à stabiliser la suspension colloïdale et notamment à éviter que les particules ne s'agglomèrent.

On entend par « batterie tout solide multicouches » au sens de l'invention, une batterie monobloc constituée par empilement et assemblage de plusieurs "cellules élémentaires". On entend par « cellule élémentaire» au sens de la présente invention, une cellule électrochimique constituée d'une anode et d'une cathode à insertion des ions lithium, séparée par un électrolyte solide conducteur des ions lithium.

On entend par batterie « tout solide » (appelée aussi ici batterie « entièrement solide »), une batterie ne comprenant pas de matériau en phase liquide. On entend par « matériau de liaison Ms » tout matériau conducteur d'ions lithium permettant l'assemblage de la couche d'anode et la couche de cathode, dont au moins une desdites couches d'anode et de cathode est revêtue d'une couche d'électrolyte, traitées thermiquement et/ou compressés mécaniquement, pour former par empilement une batterie tout solide multicouches après traitement thermique à basse température et/ou par faible compression mécanique dudit empilement. Selon l'invention, ce matériau de liaison Ms est déposé sur au moins une des deux faces (couches) déposées par électrophorèse qui seront empilées face sur face.

### 2. Description détaillée

### Préparation des suspensions colloïdales « SP+ », « SP-» et « SPn » pour le dépôt électrophorétique de couches de cathode, d'anode et d'électrolyte

De manière à avoir un dépôt parfaitement homogène en épaisseur, sans rugosité, et avec peu de défauts et le plus compact possible à l'issue du procédé de dépôt par électrophorèse, le dépôt est préférentiellement réalisé à partir de suspensions colloïdales *SP+, SP-, SPn* très stables. La stabilité des suspensions dépend de la taille des particules *P+, P-, Pn,* ainsi que de la nature du solvant utilisé et du stabilisant ayant servi à stabiliser la suspension colloïdale. On entend par « *SP+* » une suspension colloïdale de particules « *P+* » contenant des matériaux permettant d'obtenir une couche de cathode, par « *SP-* » une suspension colloïdale contenant des particules *P*- de matériaux permettant d'obtenir une couche d'anode, par « *SPn »* une suspension colloïdale de particules « *Pn* » de matériaux permettant d'obtenir une couche d'électrolyte.

Afin de faciliter la densification ultérieure éventuelle du dépôt et garantir la possibilité de faire des dépôts avec des épaisseurs et des profils (rugosité) très précis, des suspensions colloïdales contenant des particules de tailles nanométriques sont préférées. Ces particules ont de préférence une taille de particules moyenne D₅₀ inférieure à 100 nm, et plus préférentiellement (surtout dans le cas où la suspension comporte des particules de matériaux à point de fusion élevés) inférieure à 30 nm. En effet, avec des particules de faibles dimensions, la densification du dépôt est grandement facilitée dès lors que le dépôt est compact.

La réalisation de dépôts électrophorétiques à partir de suspensions colloïdales stables permet d'éviter la formation de pores, de cavités et d'amas préjudiciables à la densification du dépôt. De plus, avec cette technique, il est possible d'obtenir des dépôts ayant une excellente compacité, sans nécessairement avoir recours à des pressages mécaniques, et quelle que soit la taille des particules déposées. De plus, lorsque la taille des particules déposées est faible, i.e. pour des tailles de particules inférieures à 50 nm, la densification du dépôt peut commencer au séchage, sans nécessairement avoir recours à des traitements thermiques ; une étape de séchage du dépôt peut suffire dans certains cas.

La stabilité des suspensions peut être exprimée par leur potentiel zêta. Dans le cadre de la présente invention, la suspension est considérée comme stable lorsque son potentiel zêta est supérieur à 40 mV, et très stable lorsqu'il est supérieur à 60 mV. En revanche, lorsque le potentiel zêta est inférieur à 20 mV, des agglomérats de particules peuvent apparaitre. Aussi, pour garantir la bonne compacité de la couche, les dépôts sont dans certains modes de réalisation, réalisés à partir de suspensions colloïdales ayant un potentiel zêta supérieur à 40 mV (en valeur absolue). Cependant dans d'autres modes de réalisation préférés dans le cadre de la présente invention, les suspensions ont de faibles extraits secs en particules et le potentiel Zêta est inférieur à 40 mV, ainsi que cela est décrit plus en détail ci-après.

Les suspensions colloïdales destinées à être utilisées en électrophorèse comportent un solvant isolant électrique, qui peut être un solvant organique, ou de l'eau déminéralisée, ou un mélange de solvants, et des particules à déposer.

Dans une suspension stable, les particules ne s'agglomèrent pas entre elles pour créer des amas susceptibles d'induire des cavités, agglomérats et/ou défauts importants dans le dépôt. Les particules restent isolées dans la suspension.

Aussi, dans un mode de réalisation de la présente invention, la stabilité de la suspension nécessaire à l'obtention d'un dépôt compact est obtenue grâce à l'ajout de stabilisants. Le stabilisant permet d'éviter la floculation des poudres et la formation d'agglomérats. Il peut agir par un effet électrostatique, par un effet stérique ou par une combinaison des deux effets. La stabilisation électrostatique est basée sur la mise en place de répulsions électrostatiques entre les nanoparticules en suspension.

La stabilisation électrostatique est contrôlée par la charge de surface des particules ; elle peut par conséquent dépendre du pH. La stabilisation stérique met en oeuvre des polymères, tensio-actifs non ioniques voire des protéines, qui, ajoutés à la suspension, viennent s'absorber à la surface des particules pour causer la répulsion par encombrement de l'espace inter-particulaire. Une combinaison des deux mécanismes de stabilisation est également possible. Dans le cadre de la présente invention, on préfère la stabilisation électrostatique par rapport à la stabilisation stérique. La stabilisation électrostatique est facile à mettre en oeuvre, réversible, peu onéreuse, et qui facilite les processus ultérieurs de consolidation.

Cependant, les inventeurs ont remarqué qu'avec les nanoparticules des matériaux de batterie utilisées dans le cadre de la présente invention, il est possible d'obtenir des suspensions colloïdales stables de particules non agglomérées entre elles et/ou d'agglomérats de quelques particules, sans ajouts de stabilisants. Les particules et/ou agglomérats ont de préférence une taille inférieure à 100 nm, et plus préférentiellement inférieure à 50 nm.

Ces suspensions ont été obtenues pour de faibles extraits secs, typiquement compris entre 2 g/L et 20 g/L, de préférence entre 3 et 10 g/L, et plus particulièrement pour des extraits secs de l'ordre de 4g/l, dans une phase liquide d'alcool, de préférence l'éthanol, et/ou de cétone, de préférence l'acétone. Ces suspensions colloïdales stables de particules sans ajout de stabilisant sont particulièrement préférées dans le cadre de la présente invention.

Le potentiel Zêta de telles suspensions est généralement inférieur à 40 mV, et plus particulièrement compris entre 25 et 40 mV. Cela pourrait signifier que de telles suspensions tendent à être instables, cependant les inventeurs ont constaté que l'emploi de ces suspensions pour le dépôt électrophorétique conduisait à des couches déposées de très bonne qualité.

Des stabilisants organiques, peu volatiles pourraient conduire à isoler électriquement les nanoparticules interdisant ainsi toute réponse électrochimique.

Lorsque l'eau est utilisée comme solvant, des tensions de dépôt inférieures à 5 V sont privilégiées. En effet, au-delà de 5 V l'eau risque de subir une électrolyse donnant lieu à la production de gaz sur les électrodes qui rende les dépôts poreux et diminue leur adhérence sur le substrat. Par ailleurs, les réactions galvaniques en milieu aqueux donnent lieu à la formation de cations métalliques susceptibles de polluer les dépôts.

Dans un mode de réalisation préféré, les dépôts se font en phase solvantée. Il est ainsi possible de travailler à des valeurs de tension plus élevées, augmentant ainsi les vitesses de dépôts.

Selon l'invention, les nanoparticules utilisées pour la réalisation d'une couche de cathode sont choisies de manière préférée, mais non exhaustive, parmi un ou plusieurs des matériaux suivants :
(i) les oxydes LiMn₂O₄, LiCoO₂, LiNiO₂, LiMn_{1,5}Ni_{0,5}O₄, LiMn_{1,5}Ni_{0,5-x}XₓO₄ (où X est sélectionné parmi Al, Fe, Cr, Co, Rh, Nd, autres terres rares, et où 0 < x < 0,1), LiFeO₂, LiMn_{1/3}Ni_{1/3}CO_{1/3}O₄;
(ii) les phosphates LiFePO₄, LiMnPO₄, LiCoPO₄, LiNiPO₄, Li₃V₂(PO₄)₃ ;
(iii) toutes les formes lithiées des chalcogénides suivants : V₂O₅, V₃O₈, TiS₂, TiO_{y}S_{z}, WO_{y}S_{z}, CuS, CuS₂.

Selon l'invention, les nanoparticules utilisées pour la réalisation d'une couche d'anode sont choisies de manière préférée, mais non exhaustive, parmi un ou plusieurs des matériaux suivants :
(i) les oxynitrures d'étain (de formule typique SnOₓN_{y}) ;
(ii) les oxynitrures mixtes de silicium et étain (de formule typique SiₐSn_{b}O_{y}N_{z} avec a>0, b>0, a+b≤2, 0<y≤4, 0<z≤3) (appelés aussi SiTON), et en particulier le SiSn_{0,87}O_{1,2}N_{1,72} ; ainsi que les oxynitrures sous la forme SiₐSn_{b}C_{c}O_{y}N_{z} avec a>0, b>0, a+b≤2, 0<c-10, 0<y<24, 0<z<17; SiₐSn_{b}C_{c}O_{y}N_{z}Xₙ et SiₐSn_{b}O_{y}N_{z}Xₙ avec Xn au moins un des éléments parmi F, Cl, Br, I, S, Se, Te, P, As, Sb, Bi, Ge, Pb.
(iii) les nitrures de type SiₓN_{y} (en particulier avec x=3 et y=4), SnₓN_{y} (en particulier avec x=3 et y=4), ZnₓN_{y} (en particulier avec x=3 et y=4), Li₃₋ₓMₓN (avec M = Co, Ni, Cu) ;
(iv) les oxydes SnO₂, Li₄Ti₅O₁₂, SnB_{0,6}P_{0,4}O_{2,9}.

Les nanoparticules de Li₄Ti₅O₁₂ pour la réalisation d'une couche d'anode sont plus particulièrement préférées.

Pour la réalisation de l'anode ou de la cathode, on peut ajouter aux matériaux cités précédemment des nanoparticules de matériaux conducteurs électroniques, et en particulier de graphite, et/ou des nanoparticules de matériaux conducteurs des ions lithium, du type de ceux utilisés pour réaliser les couches d'électrolyte. En effet, certains matériaux d'électrode sont de mauvais conducteurs ioniques et électriques, par conséquent lorsqu'ils sont déposés avec des épaisseurs supérieures à 3 µm, l'électrode peut alors être trop résistive. Or des épaisseurs de 1 à 10 µm sont généralement souhaitables pour les électrodes, afin d'avoir des batteries avec de bonnes densités d'énergie. Dans ce cas il est nécessaire de réaliser un co-dépôt de particules de matériaux d'électrode et de particules conductrices (ioniques et/ou électriques).

L'électrolyte doit être un bon conducteur ionique mais également un isolant électrique. Selon l'invention, les nanoparticules utilisées pour la réalisation d'une couche d'électrolyte sont choisies de manière préférée parmi un ou plusieurs des matériaux suivants :
a) les matériaux à base d'oxydes choisis parmi Li_{3,6}Ge_{0,6}V_{0,4}O₄ ; Li₂O-Nb₂O₅ ; LiSiO₄ ; Li₂O ; Li₁₄Zn(GeO₄)₄ ; Li_{0,35}La_{0,55}TiO₃ ; Li_{0,5}La_{0,5}TiO₃; Li₇La₃Zr₂O₁₂ ; Li₅₊ₓLa₃(Zrₓ,A₂₋ₓ)O₁₂ avec A=Sc, Ti, V, Y, Nb, Hf, Ta, Al, Si, Ga, Ge, Sn et 1,4 ≤ x ≤ 2 ;
b) les matériaux à base de nitrures ou d'oxynitrures choisis parmi Li₃N; Li₃PO₄₋ₓN_{2x/3}, Li₄SiO₄₋ₓN_{2x/3}, Li₄GeO₄₋ₓN_{2x/3} avec 0 < x < 4 ou Li₃BO₃₋ₓN_{2x/3} avec 0 < x < 3 ; les matériaux à base d'oxynitrures de lithium et de phosphore (appelés LiPON) pouvant également contenir du silicium LiSiPON, du bore LiPONB, du soufre LiPONS ou de l'aluminium LiPAON voir une combinaison d'aluminium, bore, soufre et/ou silicium ; les matériaux à base d'oxynitrures de lithium et de bore (appelés LiBON) pouvant également contenir du silicium LiSiBON, du soufre LiBONS ou de l'aluminium LiBAON voir une combinaison d'aluminium, soufre et silicium ; et plus particulièrement les matériaux du type LiₓPO_{y}N_{z} avec x -2,8 et 2y = 3z avec 0,16 ≤ z ≤ 0,46 ; ou Li_{w}POₓN_{y}S_{z} avec (2x+3y+2z) = (5+w) et 3,2 ≤ x ≤ 3,8 ; 0,13 ≤ y ≤ 0,4 ; 0 ≤ z ≤ 0,2 ; 2,9 ≤ w ≤ 3,3 ; ou LiₜPₓAl_{y}OᵤNᵥS_{w} avec (5x+3y) =5 ; (2u+3v+2w) = (5+t) ; 2,9≤ t ≤3,3 ; 0,84≤ x ≤0,94 ; 0,094≤ y ≤0,26 ; 3,2≤ u ≤3,8 ; 0,13≤ v ≤0,46 ; 0≤ w ≤0,2 ; ou Li_{1,9}Si_{0,2}P_{1,0}O_{1,1}N_{1,0} ; ou Li_{2,9}PO_{3,3}N_{0,46} ;
c) les matériaux à base de sulfure choisis parmi LiₓM_{1-y}M'_{y}S₄ avec M=Si, Ge, Sn et M'=P, Al, Zn, Ga, Sb ; Li₂S ; B₂S₃ ; P₂S₅ ; 70Li₂S-30P₂S₅ ; Li₇P₃S₁₁ ; Li₁₀GeP₂S₁₂ ; Li₇PS₆ ; Li_{3,25}Ge_{0,25}P_{0,75}S₄ ; Li₁₀MP₂S₁₂ avec M = Si, Ge, Sn et les mélanges entre Li₂S et un des composés parmi P₂S₅, GeS₂, Ga₂S₃ ou SiS₂ ;
d) les matériaux à base de phosphate ou de borate choisis parmi Li₃PO₄ ; LiTi(PO₄)₃ ; Li₁₊ₓAlₓM₂₋ₓ(PO₄)₃ (ou M = Ge, Ti, et/ou Hf et où 0 < x < 1) ; Li_{1,3}Al_{0,3}Ti_{1,7}(PO₄)₃ ; Li_{1+x+y}AlₓTi₂₋ₓSi_{y}P_{3-y}O₁₂ (où 0 ≤ x ≤ 1 et 0 ≤ y ≤ 1) ; Li_{1+x+z}Mx(Ge_{1-y}Ti_{y})₂₋ₓSi_{z}P_{3-z}O₁₂ (où 0 ≤ x ≤ 0,8, 0 ≤ y ≤ 1,0, 0 ≤ z ≤ 0,6) ; 2(Li_{1,4}Ti₂Si_{0,4}P_{2,6}O₁₂)-AlPO₄ ; LiₓAl_{z-y}Ga_{y}S_{w}(PO₄)_{c} ou ; LiₓAl_{z-y}Ga_{y}S_{w}(BO₃)_{c} ou LiₓGe_{z-y}Si_{y}S_{w}(PO₄)_{c} ou ; LiₓGe_{z-y}Si_{y}S_{w}(BO₃)_{c} ou d'une manière plus générale LiₓM_{z-y}M'_{y}S_{w}(PO₄)_{c} ou LiₓM_{z-y}M'_{y}S_{w}(BO₃)_{c} avec 4 < w < 20, 3 < x <10, 0 ≤ y ≤ 1, 1 ≤ z ≤ 4 et 0 < c < 20 et M ou M' un élément parmi Al, Si, Ge, Ga, P, Zn, Sb ;
e) les matériaux mixtes choisis parmi les mélanges entre Li₂S et un des composés parmi Li₃PO₄, Li₃PO₄₋ₓN_{2x/3}, Li₄SiO₄₋ₓN_{2x/3}, Li₄GeO₄₋ₓN_{2x/3} avec 0 < x < 4 ou Li₃BO₃₋ₓN_{2x/3} avec 0 < x < 3 ; les mélanges entre soit Li₂S et/ou B₂S₃, SiS₂, P₂S₅, GeS₂, Ga₂S₃ et un composé du type LiₐMO_{b} qui peut être soit un silicate de lithium Li₄SiO₄, un borate de lithium Li₃BO₃ ou un phosphate de lithium Li₃PO₄.

Une fois la composition chimique cible souhaitée définie, i.e. nature de la poudre ou des mélanges de poudres, les nanoparticules sont mises en suspension dans une phase liquide appropriée. Dans certains modes de réalisation, on ajoute un stabilisant afin d'obtenir une suspension dont le potentiel zêta est de préférence supérieur à 40 mV.

Cependant, de manière avantageuse, on utilise des suspensions ne contenant pas ou peu de stabilisants (<10 ppm), et en particulier des suspensions ayant de faibles extraits secs (généralement inférieur à 20g/L et de préférence inférieur à 10 g/l), et en particulier des suspensions contenant des particules de tailles inférieures à 100 nm, et de préférence inférieures à 50 nm. Dans ce cas le potentiel Zêta de la suspension est généralement compris entre 25 et 40 mV.

A titre d'exemple les solvants utilisés peuvent être à base de cétone, d'alcool ou d'un mélange des deux.

Parmi les stabilisants stériques susceptibles d'être utilisés, on peut citer notamment le polyéthylène imine (PEI), l'acide polyacrylique (PAA), l'acide citrique, la nitrocellulose, l'acétylacétone sous réserve qu'ils soient solubles dans le solvant organique choisi.

Des stabilisations électrostatiques peuvent être réalisées par ajout d'iodure, par ajouts d'acides ou bases.

La conductivité électrique de la suspension peut être contrôlée pour obtenir un gradient de potentiel important entre les deux électrodes. De préférence la conductivité de la suspension colloïdale est comprise entre 1 et 20 µS/cm. Des acides et bases, faibles ou fortes, peuvent être ajoutés en faible quantité pour contrôler la conductivité de la suspension et charger les surfaces des particules.

Pour obtenir une suspension stable, avec des particules de tailles nanométriques sans agglomérats, il peut être nécessaire de réaliser une étape de broyage et/ou de dispersion des poudres, préalablement à leur mise en suspension, afin de désagglomérer les particules et éventuellement d'ajuster leur taille (pour obtenir une taille moyenne inférieure à 100 nm ou même inférieure à 30 nm) et de réduire la dispersion de taille. Des ultrasons peuvent également être mis en oeuvre pour aider à la désagglomération et à la mise en suspension des particules.

Les défauts créés dans les particules pendant les étapes de broyage dispersion, sont également susceptibles de diminuer la température de densification, au même titre que la réalisation de compressions mécaniques.

### Dépôt des couches d'anode, de cathode et d'électrolyte solide par électrophorèse

Selon l'invention, les couches d'anode, de cathode et d'électrolyte solide sont toutes déposées par voie électrophorétique. Le dépôt électrophorétique de particules se fait par l'application d'un champ électrique entre le substrat sur lequel est réalisé le dépôt et une contre-électrode, permettant de mettre les particules chargées de la suspension colloïdale en mouvement, et de les déposer sur le substrat. L'absence de liants et d'autres solvants déposés en surface avec les particules permet d'obtenir des dépôts très compacts. La compacité obtenue grâce au dépôt électrophorétique, limite voire d'évite les risques de craquelures ou d'apparition d'autres défauts dans le dépôt pendant les étapes de séchage. Cependant, pour la réalisation de dépôts de fortes épaisseurs, la mise en oeuvre d'étapes successives de dépôt/séchage peut être envisagée. L'absence de composés organiques diminue le risque de combustion de la batterie en cas de court-circuit accidentel.

De plus, du fait que le dépôt obtenu par électrophorèse ne contient pas de liants, ou d'autres composés organiques, le procédé selon la présente invention ne nécessite pas d'étapes de brulage, ou d'évaporation de composés corrosifs ou nocifs avant frittage. Or, l'accroissement des contraintes économiques et environnementales impose de réduire les rejets dans l'atmosphère, ainsi la présente invention répond bien à ces contraintes.

De plus la vitesse de dépôt peut être très élevée en fonction du champ électrique appliqué et de la mobilité électrophorétique des particules de la suspension. Pour une tension appliquée de 100V/m, des vitesses de dépôt de l'ordre de quelques µm/min peuvent être obtenues.

Les inventeurs ont constaté que cette technique permet de réaliser des dépôts sur de très larges surfaces avec une excellente homogénéité (sous réserve que les concentrations en particules et champs électriques soient homogènes sur la surface du substrat). Elle se prête aussi bien à un procédé continu en bande, c'est-à-dire le substrat est avantageusement une bande ; pendant le dépôt par électrophorèse, la bande est avantageusement stationnaire par rapport à la phase liquide.

Le substrat peut être une feuille ou une bande présentant une surface conductrice ou des éléments conducteurs, par exemple des zones conductrices. La nature du substrat au contact des électrodes doit être inerte et ne doit pas interférer et donner lieu à des réactions parasites dans le domaine de potentiel de fonctionnement de la batterie Li-ion. A titre d'exemple, un feuillard de cuivre ou aluminium, d'une épaisseur qui peut être par exemple de 6 µm, peut être utilisé, ou une bande polymère présentant un dépôt de surface électriquement conducteur (appelé aussi ici film polymère métallisé).

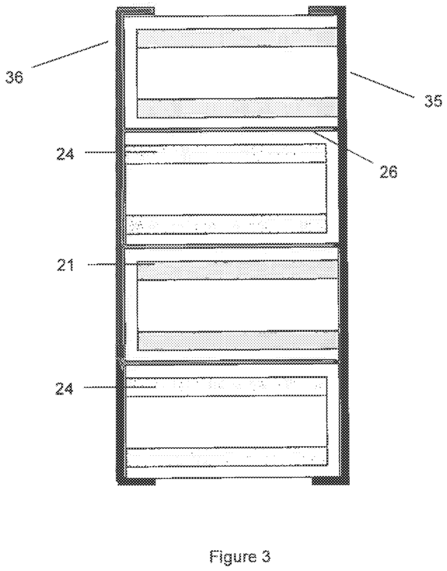

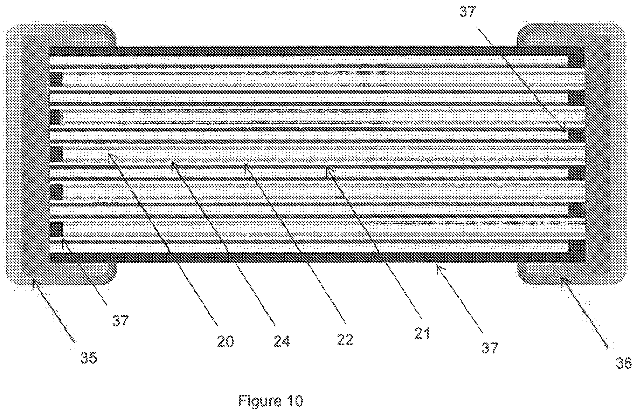

Dans le cadre de la présente invention, le substrat doit être de fine épaisseur afin que l'on puisse réaliser des découpes fines des électrodes, telles que mieux illustrée sur les figures 3 et 10. Les films métalliques et/ou polymères métallisés sont préférés. L'avantage du procédé selon l'invention est qu'il permet de réaliser des structures « tout solide » (ou « entièrement solide ») multicouches à faible température. Ainsi, des substrats à base de films polymères métallisés peuvent être avantageusement utilisés. De tels films peuvent être fabriqués industriellement avec des épaisseurs de l'ordre de 1µm, ce qui permet d'augmenter la densité d'énergie volumique des batteries en couches mince.

Avantageusement, pour améliorer la qualité des contacts électriques et éviter l'apparition de réactions parasites avec les matériaux d'électrode, les surfaces de collecteurs de courant revêtues sont revêtues par des métaux nobles ou des métaux de transition par métallisation. Préférentiellement, les métaux pouvant être déposés à la surface des collecteurs de courant sont sélectionnés parmi les métaux suivant : l'or, le platine, le palladium, le vanadium, le cobalt, le nickel, le manganèse, de niobium, le tantale, le chrome, le molybdène, le titane, le palladium, le zirconium, le tungstène ou tout alliage comprenant au moins un de ces métaux. Alternativement, des films d'oxydes conducteurs comme l'oxyde d'indium-étain (ITO) peuvent être utilisés comme revêtement sur le substrat afin d'améliorer les qualités de contact entre le substrat et les électrodes.

De préférence, ces revêtements doivent rester minces et leur épaisseur ne doit pas être supérieure à 500 nm, et de préférence les épaisseurs des couches de métallisation de surface seront de l'ordre de 100 nm. Ces couches de métallisation peuvent être réalisées sur des films, des feuillards métalliques de fine épaisseur, par exemple en aluminium ou en cuivre. De préférence, l'épaisseur de ces feuillards est inférieure à 20 µm, plus préférentiellement inférieure à 10 µm, et encore plus préférentiellement inférieur ou égal à 5 µm.

Les films polymères métallisés doivent être également de fines épaisseurs, de préférence inférieures à 5 µm, et plus préférentiellement de l'ordre de 1 µm. La nature des couches de métallisation est décrite précédemment, et les films peuvent être soit en polynaphtalate d'éthylène (PEN), polytéréphtalate d'éthylène (PET), polypropylène (PP), ou en Téflon® (PTFE), polyimide (PI), et plus spécifiquement en Kapton® pour les procédés nécessitant des traitements thermiques de 300°C.

De préférence, la rugosité des substrats n'excède pas 10% de l'épaisseur de l'électrode déposée afin d'assurer un contact optimal entre les éléments de batteries et garantir une homogénéité des propriétés d'électrodes.

Le substrat peut être préparé par exemple de la manière suivante : on approvisionne un feuillard d'aluminium d'une épaisseur comprise entre 5 et 20 µm, et de préférence de l'ordre de 15 µm. Le feuillard est ensuite positionné de manière à être maintenu « à plat ». La surface du feuillard d'aluminium est de préférence nettoyée, par exemple par immersion dans un bain de nettoyage. Ce nettoyage peut être par exemple réalisé par des immersions dans un bain de lessive de chez NGL technologie sous ultrasons, suivi d'un rinçage à l'eau distillée. Avantageusement, le feuillard est traité par électro-polissage afin de réduire son épaisseur, et/ou de supprimer les rugosités et microrugosités de surface. Ce traitement d'électro-polissage peut être réalisé dans une solution ayant la composition chimique suivante: 80% d'éthanol absolu, 13,8% d'eau distillée, 6,2% d'acide perchlorique à 70%. La tension appliquée est de l'ordre de 15V. Si nécessaire, le bain de traitement peut être refroidi pour éviter les échauffements liés aux fortes densités de courant.

Pour une meilleure qualité de surface, d'autres formulations de bains peuvent être utilisées, comme par exemple, des bains à base de solutions de type EPS 1250 ou EPS 1300 de chez EP-Systems.

Après le traitement d'électro-polissage, la surface est rincée à l'eau distillée. L'épaisseur du feuillard à l'issue de ce traitement est généralement comprise entre 1 et 10 µm.

Ce feuillard est avantageusement utilisé comme substrat d'anode et comme substrat de cathode dans le procédé selon l'invention.

Avantageusement, un traitement de nickelage peut être réalisé directement sur la surface du feuillard en aluminium juste après son traitement d'électro-polissage. Ce traitement peut être réalisé de différentes manières, soit par dépôt électrochimique, soit par immersion dans une solution contenant des sels de nickel, soit les deux successivement. A titre d'exemple, le dépôt électrolytique peut être réalisé dans un bain de composition suivante: sulfamate de nickel à 300 g/l, H₃BO₃ à 30 g/l, NiCl₂ à 30 g/l. Le nickelage est réalisé sur le feuillard en aluminium, dont la surface a été préalablement activée par électro-polissage sous une densité de courant de l'ordre de 2 A/dm², en utilisant une contre électrode en nickel. Ce traitement de nickelage permet d'éviter la formation d'une couche d'oxyde à la surface de l'aluminium, et d'améliorer la qualité des contacts électriques, et l'adhérence des dépôts.

Le traitement cité précédemment peut être réalisé à partir d'autres métaux susceptibles d'être déposés sur la surface du feuillard en aluminium, tel que décrit ci-avant, i.e. l'or, le platine, le palladium, le vanadium, le cobalt, le manganèse, le niobium, le tantale, le chrome, le molybdène, le titane, le palladium, le zirconium, le tungstène, le nickel ou tout alliage comprenant au moins un de ces métaux. Le dépôt peut être réalisé par des techniques bien connues de l'homme du métier, et plus particulièrement par dépôt chimique en phase vapeur, ou par voie physique, notamment par évaporation et/ou par dépôt physique en phase vapeur.

L'épaisseur de chacune des couches de cathode et d'anode est de préférence comprise entre 0,5 µm et 10 µm. L'épaisseur de la couche d'électrolyte est de préférence inférieure à 2 µm, et encore plus préférentiellement inférieure à 1 µm.

Après le dépôt de la couche de cathode et de la couche d'anode chacune sur un substrat conducteur, on peut effectuer une étape de densification mécanique (par exemple par pressage) afin de compacter davantage les particules et induire des déformations des particules qui faciliteront encore plus la densification ultérieure.

Cependant, on préfère dans d'autres modes de réalisation procéder à un traitement thermique avant l'étape de densification mécanique.

Dans certains modes de réalisation particuliers selon l'invention, il n'est pas nécessaire de procéder à une étape de densification thermique et/ou mécanique, car la couche déposée par électrophorèse est déjà dense et compacte. En effet, les inventeurs ont constaté que lorsque des suspensions stables de particules sont obtenues sans ou avec peu (<10 ppm) de stabilisants, la couche obtenue après dépôt par électrophorèse est dense et compacte sans qu'aucune densification thermique et/ou mécanique n'ait été réalisée, et cela plus particulièrement lorsque la taille des particules déposées par électrophorèse sont inférieures à 50 nm.

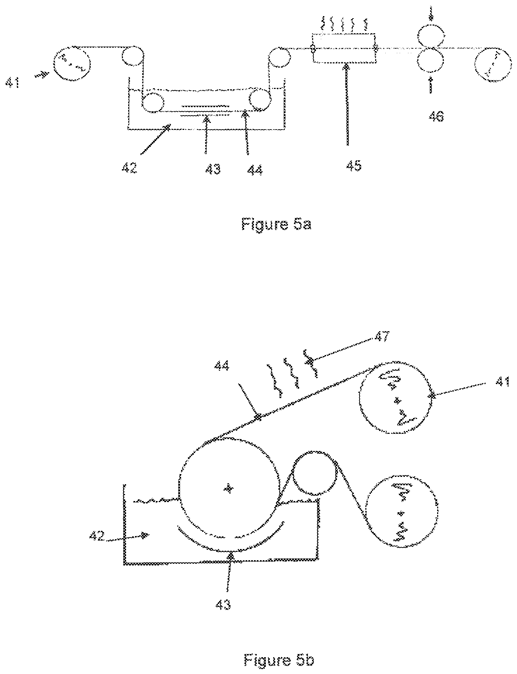

Le dépôt par électrophorèse peut être mis en oeuvre dans un procédé de type « batch » (statique) ou dans un procédé continu. Les figures 5a et 5b illustrent différents modes de réalisation de dépôts par électrophorèse, pour réaliser aussi bien des bandes ou des revêtements sur substrat conducteur.

Lors du dépôt électrophorétique, une alimentation stabilisée permet d'appliquer une tension entre le substrat conducteur et deux électrodes situées de part et autre de ce substrat. Cette tension peut être continue ou alternative. Un suivi précis des courants obtenus permet de suivre et de contrôler précisément les épaisseurs déposées. Lorsque les couches déposées sont isolantes, en fonction de leur épaisseur, elles peuvent affecter la valeur du champ électrique, aussi, dans ce cas, on privilégie un mode de dépôt en courant contrôlé. En fonction de la résistivité de l'interface, la valeur du champ électrique est modifiée.

La figure 5a montre de manière schématique une installation pour mettre en oeuvre le procédé selon l'invention. L'alimentation électrique située entre les contre-électrodes **43** et le substrat conducteur **44** n'est pas représentée. On applique un champ électrique entre les deux contre-électrodes **43** et le substrat **44** pour déposer des particules de la suspension colloïdale **42** sur les deux faces du substrat **44.**

Le bobineau de feuillard (bande) conducteur électrique **44** servant de substrat est déroulé à partir d'un dérouleur **41.** Après le dépôt la couche déposée est séchée dans un four de séchage **45** puis consolidé par compaction mécanique à l'aide d'un moyen de compaction **46** approprié. La compaction peut être réalisée sous atmosphère contrôlée et pour des températures comprises entre la température ambiante et la température de fusion des matériaux déposés.

La représentation de la figure 5a est intéressante pour la fabrication de dépôts de matériaux actifs sur des collecteurs de courant servant à réaliser des électrodes de batterie. Cependant, on peut se limiter à revêtir qu'une seule face du substrat. Aussi, la figure 5b représente un dispositif pour réaliser un revêtement sur une seule face conductrice, sans densification mécanique.

Par ailleurs cette technique de dépôts permet un recouvrement parfait de la surface quelle que soit sa géométrie, la présence de défauts d'aspérité. Elle permet par conséquent de garantir les propriétés diélectriques du dépôt.

L'absence de contacts mécaniques permet de réaliser ces dépôts sur des surfaces extrêmement larges. En effet, avec des techniques de dépôts connues comme le roll coat, doctor blade etc. il est difficile de garantir une parfaite homogénéité d'épaisseur sur des substrats larges, ce qui fait que les lignes de revêtement sont souvent limitées en largeur. A titre d'exemple, lorsque l'on souhaite réaliser des dépôts de batteries Li-ion de puissance, autrement dit des dépôts de fines épaisseurs, la largeur maximale de bande se situe aux alentours de 200 à 300 mm, ce qui limite fortement la capacité de production des lignes de revêtement selon l'état de la technique.

Lorsque des matériaux peu ou pas conducteurs électriques sont déposés sur la surface d'un substrat, les éventuelles zones moins bien revêtues, sont plus conductrices et concentrent ainsi localement une vitesse de dépôt plus importante qui tend à compenser voir effacer le défaut. Les dépôts obtenus sont ainsi intrinsèquement d'excellente qualité, avec peu de défauts et très homogènes.

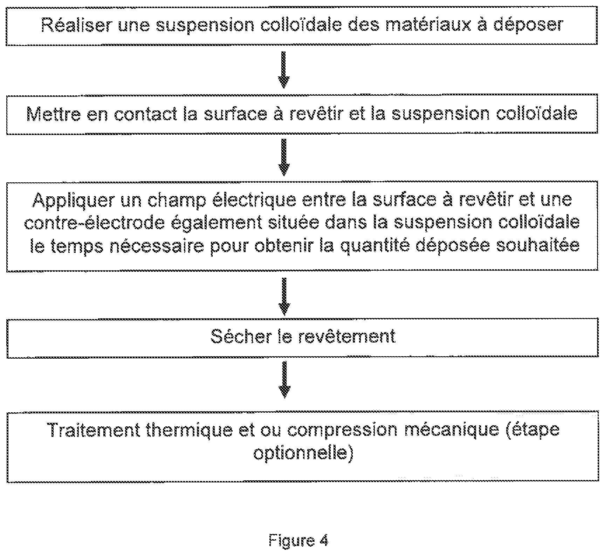

Le diagramme de la figure 4 présente un mode de réalisation typique du procédé selon l'invention :
- 1° étape : Préparation des suspensions. Dans une première étape on utilise des poudres de la composition chimique du revêtement souhaitée.
- 2° étape : Immersion d'un substrat métallique dans la suspension colloïdale. La suspension colloïdale peut recouvrir la totalité de la surface du substrat. Dans un mode de réalisation particulier, un masque peut être appliqué sur la surface du substrat de manière à limiter la surface en contact de la suspension et par voie de conséquence réduire la surface de dépôt.
- 3° étape : Application d'un champ électrique entre le substrat et une contre électrode située dans la suspension colloïdale. Ce champ électrique peut être constant et / ou variable (alternatif). Le sens moyen du champ électrique, c'est-à-dire du potentiel appliqué aux électrodes est adapté à la charge de la particule à déposer (cataphorèse ou anaphorèse).
- 4° étape : Les conditions de séchage dépendent de l'épaisseur déposée ainsi que de la nature du solvant.
- 5° étape : densification du dépôt (étape optionnelle selon certains modes particuliers de réalisation selon l'invention).

Dans certains modes particuliers de réalisation selon l'invention, plus particulièrement lorsque les tailles de particules des suspensions colloïdales sont inférieures à 50 nm, il n'existe plus de distinction entre l'étape de séchage (4^{ème} étape) et l'étape de traitement thermique de consolidation (5^{ème} étape) car les commencent à se densifier lors du séchage. La densification du dépôt lors du séchage peut être expliqué par plusieurs paramètres dont les caractéristiques physico-chimiques des particules, notamment leur nature chimique, leur taille, leur point de fusion, leur module d'Young, mais peut être également lié à la présence de stabilisants, ainsi qu'au type de solvant utilisé, ainsi qu'à la nature du champ électrique.

### Densification du dépôt de la couche d'anode, de cathode et/ou d'électrolyte

Dans un mode particulier de réalisation selon l'invention, les couches déposées, i.e. la couche d'anode, de cathode et/ou d'électrolyte sont densifiées par traitement thermique et/ou compression mécanique, afin de minimiser les cavités, pores, fissures et autres défauts de compacité. Cette étape de densification du dépôt peut être réalisée :
i. par un moyen mécanique, en particulier par compression uni-axiale. La pression appliquée est de préférence comprise entre 10 et 100 MPa; une valeur de l'ordre de 50 MPa donne de très bons résultats ; Dans d'autres modes de réalisation la pression appliquée est supérieure à 250 MPa, voire supérieure à 400 MPa ;
ii. par un traitement thermique. La température dépend fortement de la composition chimique des poudres déposées. Selon la nature des matériaux déposés, il peut être utile par ailleurs de maintenir une atmosphère contrôlée afin d'éviter la détérioration des propriétés du revêtement ;
iii. par une combinaison de moyens thermiques et mécaniques, en particulier par frittage sous pression.

Dans un autre mode de réalisation selon l'invention, les couches d'anode et de cathode déposées ne subissent pas de traitement thermique et/ou compression mécanique après leur dépôt lorsque celles-ci sont susceptibles d'être directement denses et compactes après leur dépôt. En effet, lorsque les couches d'anode et de cathode sont déposées par électrophorèse à partir de suspensions colloïdales de très faible taille de particules, typiquement des tailles de particules inférieures à 50 nm, et lorsque lesdites suspensions ne contiennent pas ou peu de stabilisants (de l'ordre de quelques ppm), les nanoparticules déposées peuvent commencer à se consolider et former directement un dépôt dense sous l'influence de la pression électrostatique exercée par le champ électrique et appliquée pendant l'étape de dépôt. Ce mécanisme est d'autant plus prononcé que les particules déposées sont isolantes, de faibles tailles, de faible température de fusion et déposées avec ces champs électriques élevés. Ainsi, de telles suspensions de nanoparticules, permettent la réalisation de dépôts, minces, denses ne contenant que très peu de défauts. Les contraintes liées à la consolidation sont fortement réduites et il est ainsi possible de faire après consolidation des films minces, denses, sans fissures, les faibles rétreints résiduels s'effectuant dans le sens de l'épaisseur du film. Dans certains cas, même si la consolidation a débuté pendant le séchage, il est dans certains cas préférable de la finaliser par un traitement thermique à plus haute température.

De plus, le dépôt par électrophorèse de tels matériaux permet de travailler directement sur des substrats métalliques et/ou films métallisés, contrairement aux techniques habituels de frittages de poudres contenu dans des encres, présentant des contraintes de fabrication liées à la température de consolidation et au problème de et rétreints associé

Le substrat sur lequel sont déposées les couches de batteries est composé d'un matériau conducteur électrique généralement métallique. Lorsque le substrat est métallique, on préfère éviter de le chauffer à des températures élevées lors de la fabrication de la batterie, afin d'éviter tout risque d'oxydation et de détérioration des propriétés de surfaces. La réduction de l'oxydation de surface est particulièrement bénéfique pour diminuer des résistances de contact électrique, point essentiel au fonctionnement de dispositifs de stockage et/ou production d'énergie.

L'obtention de couches électrophorétiques de très bonne qualité tel que décrit ci-dessus, et en particulier de couches compactes, permet de réduire la durée et la température des traitements thermiques et de limiter le retreint de ces traitements, et d'obtenir une structure nanocristalline homogène. Ceci contribue à l'obtention de couches denses sans défauts.

Les inventeurs ont constaté que plus la taille des particules déposées diminue, plus la température du traitement thermique peut être diminuée, ou même être optionnelle lorsque la taille des particules est inférieure à 100 nm, de préférence inférieure à 50 nm. Il est ainsi possible de réaliser des dépôts en couches minces, ou relativement épaisses, avec des taux de porosité inférieure à 5% voire 2% sans avoir recours à des températures et/ou durées de traitement thermiques importants. Par ailleurs, cette technologie de compaction des dépôts à faible température réduit considérablement les risques de rétreint. Aussi, il n'est plus nécessaire d'avoir recours à des cycles de traitement thermique très complexes et coûteux pour consolider les dépôts de céramiques des couches d'électrodes et d'électrolyte des batteries.

Durant la phase de densification mécanique et/ou thermique, lorsque nécessaire, il peut être avantageux de travailler sous vide, ou sous atmosphère inerte afin d'éviter l'apparition de pollution sur les surfaces des particules qui pourraient nuire au mécanisme de densification des particules entre elles.

Pour des tailles de particules telles que celles utilisées dans le procédé selon l'invention, c'est l'augmentation des énergies de surface qui devient la principale force motrice de la densification par traitement thermique; cela se traduit par une forte baisse des températures de densification lorsque la taille des particules diminue. Cependant, pour que cette réduction des températures de consolidation soit effective, il peut être nécessaire que les particules soient au préalable compactées mécaniquement, et/ou déposées avec un empilement compact. Dans ce cas, la multiplication des contacts mécaniques entre ces particules permet de faciliter les processus diffusionnels à l'origine de la densification. Aussi, pour compacter les dépôts, des pressages sont généralement appliqués. Cette technique de compaction par pressage (calandrage) est bien adaptée aux dépôts constitués de particules de tailles microniques ou supérieures.

La présence d'agglomérats, de cavités inter-agglomérats influence également la densification. Plus leurs tailles augmentent, plus la distance de diffusion augmente et plus la température de densification est élevée pour obtenir une bonne densification. Ainsi, avec des nanoparticules déposées par électrophorèse on peut s'approcher de la densité théorique géométrique d'un empilement compact de sphères (74%), sans étape de compaction mécanique.

La forte compacité du dépôt obtenu par électrophorèse, et la faible quantité de solvant à évaporer limite très sensiblement le risque d'apparition de fissures après séchage. Par ailleurs, la faible taille des particules, leur grande surface spécifique tend à faciliter les étapes de consolidation par un traitement thermique (appelé parfois dans ce contexte : « frittage »). La densification par traitement thermique du dépôt, lorsque elle est nécessaire, peut ainsi être réalisée à des températures ne dépassant pas de 0,7T_{f}, voire 0,5T_{f} ou 0,3T_{f} où T_{f} est la température de fusion ou de décomposition (exprimée en °C) du matériau massif de composition chimique identique à celle de la particule déposée. Lorsque plusieurs particules sont co-déposées, il s'agit de considérer la plus fusible des deux. Pour réduire encore cette température de densification, il est également possible d'appliquer une compression mécanique à ce dépôt afin d'accroitre davantage sa compacité, et/ou créer des défauts ponctuels qui vont contribuer à accélérer le processus de densification, et d'obtention de couches sans porosités. Un tel procédé de fabrication peut être utilisé directement sur des substrats comme des feuillards en aluminium, ayant de faibles températures de fusion.

Les nanoparticules étant très sensibles aux pollutions de surfaces, il est cependant préférable de réaliser ces traitements de consolidation sous vide, ou bien sous atmosphère inerte.

### Dépôt d'une couche de matériau de liaison Ms

Après l'étape de dépôt par électrophorèse d'une couche d'anode et de cathode chacune sur un substrat conducteur, ou après l'étape de dépôt d'une couche d'électrolyte sur la couche d'anode et/ou la couche de cathode, les couches obtenues peuvent être denses, notamment lorsque les tailles des particules « *P+* », « *P-*» et « *Pn* » sont extrêmement faibles, c'est-à-dire pour des tailles de particules inférieures à 100 nm, de préférence inférieures à 50 nm. Les inventeurs ont constaté que l'assemblage des couches entre elles peut s'avérer difficile et il est alors nécessaire d'apporter (par voie thermique et/ou mécanique) une grande quantité d'énergie pour les lier. Or, l'utilisation de températures élevées pour assembler les couches est très désavantageuse car les couches peuvent s'oxyder, des problèmes d'inter-diffusion dans les couches peuvent se créer et les collecteurs peuvent être fortement détériorés.

Selon un aspect essentiel de la présente invention, afin de faciliter l'empilement des couches obtenues par dépôt électrophorétique, on réalise, avant ladite étape d'empilement, un dépôt d'une couche de de matériau de liaison Ms soit :
∘ directement sur la face de la couche d'anode ou de cathode obtenue par électrophorèse ; ou
∘ sur la face de la couche d'anode et/ou de cathode revêtues d'une couche d'électrolyte obtenues par électrophorèse ; ou
∘ sur la face de la couche d'anode revêtue d'une couche d'électrolyte et sur la face de la couche de cathode obtenues par électrophorèse ; ou sur la face de la couche d'anode et sur la face de la couche de cathode revêtue d'une couche d'électrolyte obtenues par électrophorèse.

La couche de matériau de liaison Ms doit être, comme l'électrolyte, un bon conducteur d'ions lithium.

Le point de fusion de la couche de matériau de liaison telle que déposée doit être inférieur à celui des couches avec lequel il est en contact. Cela peut résulter du choix du matériau Ms, mais aussi de la forme sous laquelle il se présente dans la couche. En particulier, on sait que le point de fusion d'un matériau présent sous la forme de nanoparticules est plus faible que le point de fusion du matériau dense, ce qui est lié à la forte énergie surfacique des nanoparticules.

Dans un mode de réalisation avantageux, le matériau de liaison Ms est déposé sous la forme d'une couche composée de nanoparticules, par exemple par électrophorèse, et/ou sous la forme d'une couche très mince (par exemple d'une épaisseur inférieure à 50 nm ou 20 nm) afin de diminuer la température de traitement thermique réalisé à l'étape d). Il est alors possible d'empiler face sur face deux couches denses par la réalisation d'un dépôt d'une couche de matériau de liaison Ms sur au moins une desdites deux couches denses, la température du traitement thermique T_{R} de l'étape d) permettant de lier lesdites deux couches denses, s'il est effectué, étant inférieure à la température de fusion du ou des matériaux constitutifs des couches denses.

Dans un mode de réalisation, qui illustre la possibilité du procédé selon l'invention de réaliser un empilement mécanique de deux matériaux identiques, on dépose en tant que matériau de liaison Ms une mince couche de particules nanométriques de matériau d'électrolyte sur une couche densifiée d'électrolyte, puis on empile (typiquement par voie mécanique) sur cette mince couche de matériau de liaison une seconde couche densifiée d'électrolyte, et on soumet l'ensemble à un traitement thermique et/ou mécanique de densification, au cours duquel le matériau de liaison va assurer la liaison entre les deux couches d'électrolyte. Cette liaison se crée probablement par un mécanisme de diffusion ou de migration de matériau de liaison, plus fusible, en direction des couches, moins fusibles mais chimiquement identiques, avec lesquelles il est en contact.

D'une manière générale, pour assembler par empilement lesdites couches obtenues par électrophorèse, le matériau de liaison Ms est choisi parmi un ou plusieurs des matériaux suivants :
a) les matériaux à base d'oxydes choisis parmi Li_{3,6}Ge_{0,6}V_{0,4}O₄ ; Li₂O-Nb₂O₅ ; LiSiO₄ ; Li₂O ; Li₁₄Zn(GeO₄)₄ ; Li_{0,35}La_{0,55}TiO₃ ; Li_{0,5}La_{0,5}TiO₃; Li₇La₃Zr₂O₁₂ ; Li₅₊ₓLa₃(Zrₓ,A₂₋ₓ)O₁₂ avec A=Sc, Ti, V, Y, Nb, Hf, Ta, Al, Si, Ga, Ge, Sn et 1,4 ≤ x ≤ 2 ;
b) les matériaux à base de nitrures ou d'oxynitrures choisis parmi Li₃N; Li₃PO₄₋ₓN_{2x/3}, Li₄SiO₄₋ₓN_{2x/3}, Li₄GeO₄₋ₓN_{2x/3} avec 0 < x < 4 ou Li₃BO₃₋ₓN_{2x/3} avec 0 < x < 3 ; les matériaux à base d'oxynitrures de lithium et de phosphore (appelés LiPON) pouvant également contenir du silicium (appelés LiSiPON), du bore (appelés LiPONB), du soufre (appelés LiPONS) ou de l'aluminium (appelés LiPAON) ou une combinaison d'aluminium, bore, soufre et/ou silicium ; les matériaux à base d'oxynitrures de lithium et de bore (appelés LiBON) pouvant également contenir du silicium (appelés LiSiBON), du soufre (appelés LiBONS) ou de l'aluminium (appelés LiBAON) our une combinaison d'aluminium, soufre et silicium ; et plus particulièrement les matériaux du type LiₓPO_{y}N_{z} avec x ∼2,8 et 2y = 3z avec 0,16 ≤ z ≤ 0,46 ; ou Li_{w}POₓN_{y}S_{z} avec (2x+3y+2z) = (5+w) et 3,2 ≤ x ≤ 3,8 ; 0,13 ≤ y ≤ 0,4 ; 0 ≤ z ≤ 0,2 ; 2,9 ≤ w ≤ 3,3 ; ou LiₜPₓAl_{y}OᵤNᵥS_{w} avec (5x+3y) =5 ; (2u+3v+2w) = (5+t) ; 2,9≤ t ≤3,3 ; 0,84≤ x ≤0,94 ; 0,094≤ y ≤0,26 ; 3,2≤ u ≤3,8 ; 0,13≤ v ≤0,46 ; 0≤ w ≤0,2 ; ou Li_{1,9}Si_{0,2}P_{1,0}O_{1,1}N_{1,0} ; ou Li_{2,9}PO_{3,3}N_{0,46} ;
c) les matériaux à base de sulfure choisis parmi LiₓM_{1-y}M'_{y}S₄ avec M=Si, Ge, Sn et M'=P, Al, Zn, Ga, Sb ; Li₂S ; B₂S₃ ; P₂S₅ ; 70Li₂S-30P₂S₅ ; Li₇P₃S₁₁ ; Li₁₀GeP₂S₁₂ ; Li₇PS₆ ; Li_{3,25}Ge_{0,25}P_{0,75}S₄ ; Li₁₀MP₂S₁₂ avec M = Si, Ge, Sn et les mélanges entre Li₂S et un des composés parmi P₂S₅, GeS₂, Ga₂S₃ ou SiS₂ ;
d) les matériaux à base de phosphate ou de borate choisis parmi Li₃PO₄ ; LiTi(PO₄)₃ ; Li₁₊ₓAlₓM₂₋ₓ(PO₄)₃ (ou M = Ge, Ti, et/ou Hf et où 0 < x < 1) ; Li_{1,3}Al_{0,3}Ti_{1,7}(PO₄)₃ ; Li_{1+x+y}AlₓTi₂₋ₓSi_{y}P_{3-y}O₁₂ (où 0 ≤ x ≤ 1 et 0 ≤ y ≤ 1) ; Li_{1+x+z}Mx(Ge_{1-y}Ti_{y})₂₋ₓSi_{z}P_{3-z}O₁₂ (où 0 ≤ x ≤ 0,8, 0 ≤ y ≤ 1,0, 0 ≤ z ≤ 0,6) ; 2(Li_{1,4}Ti₂Si_{0,4}P_{2,6}O₁₂)-AlPO₄ ; LiₓAl_{z-y}Ga_{y}S_{w}(PO₄)_{c} ou LiₓAl_{z-y}Ga_{y}S_{w}(BO₃)_{c} ou LiₓGe_{z-y}Si_{y}S_{w}(PO₄)_{c} ou LiₓGe_{z-y}Si_{y}S_{w}(BO₃)_{c} ou d'une manière plus générale LiₓM_{z-y}M'_{y}S_{w}(PO₄)_{c} ou LiₓM_{z-y}M'_{y}S_{w}(BO₃)_{c} avec 4 < w < 20, 3 < x <10, 0 ≤ y ≤ 1, 1 ≤ z ≤ 4 et 0 < c < 20 et M ou M' un élément parmi Al, Si, Ge, Ga, P, Zn, Sb ;
e) les matériaux mixtes choisis parmi les mélanges entre Li₂S et un des composés parmi Li₃PO₄, Li₃PO₄₋ₓN_{2x/3}, Li₄SiO₄₋ₓN_{2x/3}, Li₄GeO₄₋ₓN_{2x/3} avec 0 < x < 4 ou Li₃BO₃₋ₓN_{2x/3} avec 0 < x < 3 ; les mélanges entre soit Li₂S et/ou B₂S₃, SiS₂, P₂S₅, GeS₂, Ga₂S₃ et un composé du type LiₐMO_{b} qui peut être soit un silicate de lithium Li₄SiO₄, un borate de lithium Li₃BO₃ ou un phosphate de lithium Li₃PO₄.

Dans une variante de réalisation, le matériau de liaison Ms comporte/est constitué d'au moins un polymère imprégné d'un sel de lithium, le polymère étant de préférence choisi dans le groupe formé par le polyéthylène oxyde, les polyimides, le polyfluorure de vinylidène, le polyacrylonitrile, le polyméthacrylate de méthyle, les polysiloxanes, et le sel de lithium étant de préférence choisi parmi LiCl, LiBr, Lil, Li(ClO₄), Li(BF₄), Li(PF₆), Li(AsF₆), Li(CH₃CO₂), Li(CF₃SO₃), Li(CF₃SO₂)₂N, Li(CF₃SO₂)₃, Li(CF₃CO₂), Li(B(C₆H₅)₄), Li(SCN), Li(NO₃).

Le dépôt de la couche de matériau de liaison Ms peut être indifféremment réalisé parmi l'une des techniques suivantes :
i. technique de dépôt sous vide, et plus particulièrement par dépôt physique par phase vapeur, dépôt chimique par phase vapeur, ou dépôt chimique en phase vapeur assisté par plasma ; ou
ii. technique de dépôt de type sol-gel ; ou
iii. technique de dépôt par trempe de nanoparticules, plus particulièrement techniques d'encrage, de trempe, de centrifugation (spin-coating), Langmuir-Blodgett ;
iv. technique d'électropulvérisation (« electrospraying ») ;
v. technique de dépôt par aérosol ; ou
vi. technique de dépôt par électrophorèse.

Pour garantir de bonnes performances des électrodes, ces dépôts doivent être de faible épaisseur, de préférence inférieure à 200 nm, et encore plus préférentiellement inférieure à 100 nm afin de ne pas induire de trop grands effets résistifs dans la cellule de la batterie.

Les techniques de dépôt sol-gel permettent de réaliser un dépôt compact de matériau de liaison « Ms ». Cette technique est bien adaptée à la réalisation de couches dont l'épaisseur est inférieure à 200 nm.

Il est également possible de déposer une couche de matériau de liaison Ms en utilisant une suspension comprenant préalablement des nanoparticules de matériau de liaison Ms dans un liquide approprié qui sera par la suite évaporé. Il s'agit plus particulièrement des techniques d'encrage, de trempe, de spin-coating ou Langmuir-Blodgett.

Les techniques de dépôt par électropulvérisation peuvent également être utilisées pour réaliser des dépôts de matériau de liaison Ms sous forme de nanoparticules. Ce dépôt est réalisé par pulvérisation de composés chimiques réagissant sous l'influence d'un champ électrique pour former en surface une couche de matériau de liaison Ms après séchage. Une telle technique de dépôt est décrite dans l'article « The production of thin film of LiMn2O4 by electrospraying», J. of Aerosol Science, Vol.25, n°6, p.1229-1235*.*

Dans un autre mode de réalisation, le dépôt de nanoparticules de matériau de liaison Ms peut être effectué par la technique de dépôt de type « aérosol ». Les nanoparticules de matériau Ms contenues dans un réservoir sont mises en mouvement par l'injection d'un gaz sous pression dans le conteneur. Un dispositif de désagglomération peut être installé sur le jet de particules afin de briser les agglomérats et assurer un flux de particules de tailles contrôlées.

Enfin, la technique de dépôt par électrophorèse, telle que décrit précédemment pour la réalisation de dépôt de couche d'anode, de cathode et d'électrolyte, permet d'obtenir une couche de matériau de liaison Ms de faible épaisseur.

Après le dépôt de la couche de matériau Ms sur la face d'au moins une des couches obtenues par électrophorèse, lesdites couches sont empilées face sur face puis compressées mécaniquement et/ou traitées thermiquement pour obtenir une batterie entièrement solides de structure empilée multicouches. De préférence, le traitement thermique des couches à assembler est réalisé à une température T_{R} qui, de préférence, ne dépasse pas 0,7 fois la température de fusion ou de décomposition (exprimée en °C), et plus préférentiellement ne dépasse pas 0,5 fois (et encore plus préférentiellement ne dépasse pas 0,3 fois) la température de fusion ou de décomposition (exprimée en °C) du matériau de liaison Ms.

Avantageusement, la compression mécanique des couches à assembler est réalisée à une pression comprise entre 10 et 100 MPa, de préférence entre 10 et 50 MPa. L'épaisseur totale de la couche de matériau de liaison Ms dépend aussi de la nature des couches à assembler. Par exemple, lorsqu'on souhaite assembler une couche de cathode et une couche d'anode revêtue chacune d'une couche d'électrolyte solide, l'épaisseur de la couche de matériau de liaison Ms doit être très faible, i.e. inférieure à 100 nm, de préférence inférieure à 50 nm et encore plus préférentiellement inférieure à 30 nm, pour que l'électrolyte obtenue reste bon conducteur ionique. Enfin, lorsqu'on souhaite assembler une couche d'anode (respectivement de cathode) non revêtue d'une couche d'électrolyte et une couche de cathode (respectivement d'anode) revêtue d'une couche d'électrolyte, l'épaisseur de la couche de matériau de liaison Ms est inférieure à 100 nm, de préférence inférieure à 50 nm et encore plus préférentiellement inférieure à 30 nm. Avantageusement, la taille des particules de matériau Ms est inférieure à l'épaisseur de la couche sur laquelle on dépose le matériau Ms.

### Assemblage d'une batterie

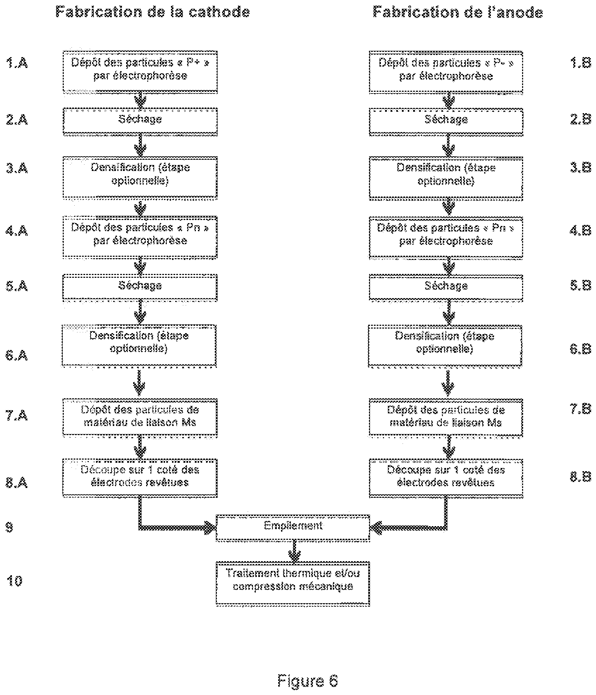

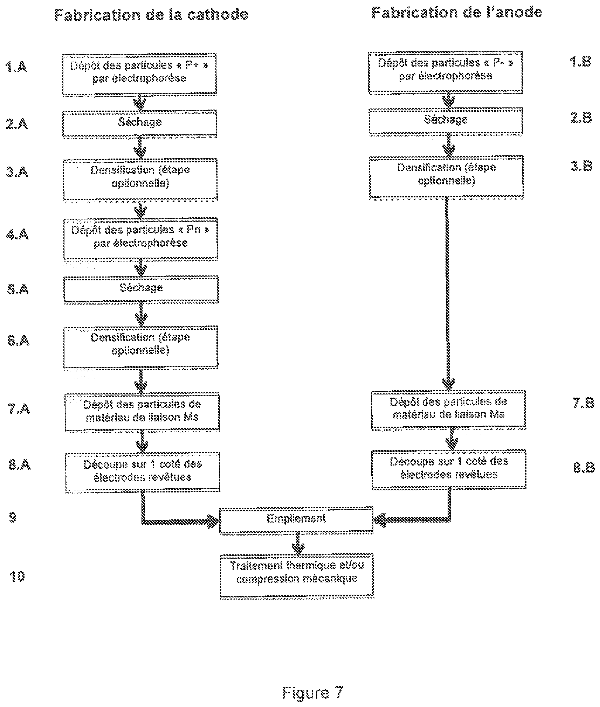

Les figures 6 et 7 montrent de manière schématique les étapes de fabrication d'une batterie selon différents modes de réalisation du procédé selon l'invention. Ces modes de réalisation ne sont nullement limitatifs mais sont donnés à titre d'illustration.

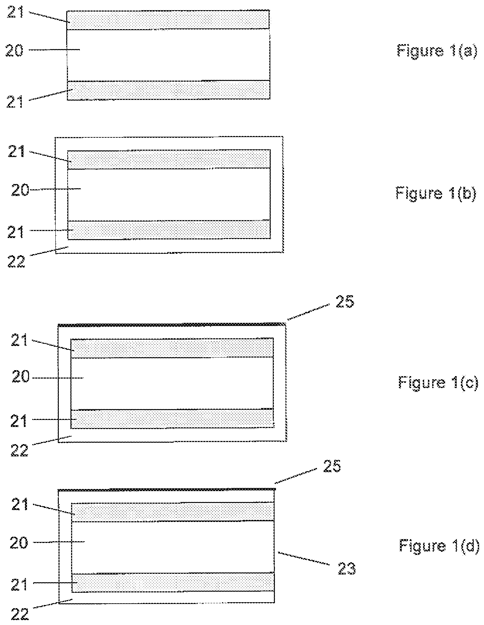

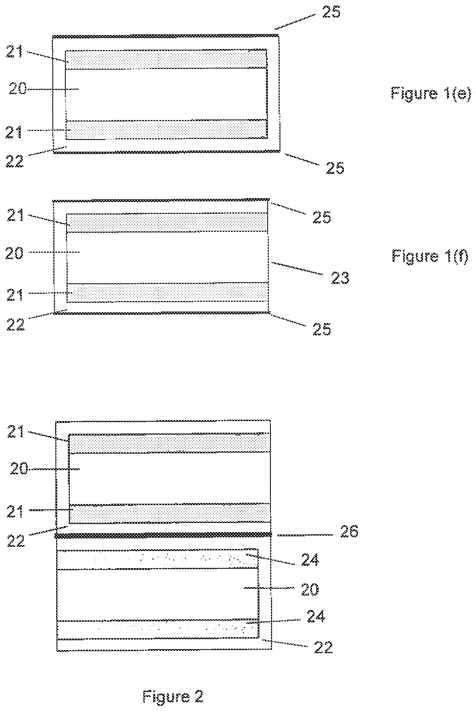

Le produit obtenu à chaque étape est montré de manière schématique sur les figures 1a à 1d selon un premier mode de réalisation de l'invention (figure 6). Aux étapes 1.A et 1.B on dépose par électrophorèse une couche de cathode **24** et d'anode **21,** respectivement, sur le substrat conducteur **20.** Comme montré sur la figure 1a pour l'anode **21,** ce dépôt peut être effectué sur les deux faces du substrat conducteur. Aux étapes 2.A et 2.B on sèche la couche déposée par électrophorèse.

Dans un mode de réalisation particulier selon l'invention, on densifie le dépôt aux étapes 3.A et 3.B par un moyen mécanique et/ou thermique. Cette densification mécanique permet d'obtenir une densité supérieure à 90% de la densité théorique du corps massif, voire supérieure à 95%. Le séchage peut être fait avant ou après la densification mécanique. Lorsque la couche de cathode et/ou la couche d'anode sont denses et compactes après l'étape de séchage, les étapes 3.A et 3.B ne sont pas nécessaires.

Aux étapes 4.A et 4.B, on dépose sur l'anode **21** et sur la cathode **24,** respectivement, une couche d'électrolyte **22** (figure 6). Son épaisseur est de préférence inférieure à 3 µm. Ce dépôt recouvre également les bords (i.e. les tranches) des électrodes, comme montré de manière schématique sur la figure 1b. Cette isolation des bords des électrodes évite à la fois le risque de court-circuit et le risque de courants de fuite. Elle permet également de simplifier l'encapsulation. Certaines céramiques et/ou vitrocéramiques conductrices des ions lithium peuvent également protéger la cellule de l'environnement externe. Une seule couche d'encapsulation sous forme de polymère ou de silicone peut alors être utilisée pour protéger la cellule batterie. Aux étapes 5.A et 5.B on sèche ce dépôt d'électrolyte.

Dans un mode de réalisation particulier selon l'invention, on densifie le dépôt aux étapes 6.A et 6.B par un moyen mécanique et/ou thermique. Cette étape n'est pas nécessaire lorsque la couche d'électrolyte obtenue est déjà dense et compacte après l'étape de séchage.

Dans un autre mode de réalisation, tel que représenté en figure 7, on dépose la couche d'électrolyte **22** uniquement sur la cathode **24.** Son épaisseur est de préférence inférieure à 1 µm. Ce dépôt recouvre également les bords (i.e. les tranches) des électrodes, comme montré de manière schématique sur la figure 1b. Cette isolation des bords des électrodes évite à la fois le risque de court-circuit et le risque de courants de fuite. A l'étape 5.A on sèche ce dépôt d'électrolyte.

Aux étapes 7.A et 7.B (figures 6 et 7) on dépose une couche de matériau de liaison Ms sur la face d'au moins une des deux couches obtenues par dépôt électrophorétique et qui seront empilées face sur face.

Aux étapes 8.A et 8.B, on découpe un bord des électrodes comme le montre la figure 1d ou 1f. De manière avantageuse, on découpe le bord lié à la bande, afin de laisser trois arêtes revêtues d'électrolyte sur la tranche. Cet électrolyte étant un diélectrique, il permettra lors de la prochaine étape d'empilement de ne faire apparaître que les contacts anodiques d'un côté de la cellule, respectivement cathodiques sur l'autre, afin de réaliser des assemblages en parallèle des éléments de batterie afin de constituer une cellule batterie de plus forte capacité. La figure 1d ou 1f montre schématiquement une telle section de cellule après découpe : le substrat **20** a été revêtu (ici sur les deux faces) d'une couche de cathode **21** et coupé sur une tranche **23.** A l'étape 9, on réalise l'empilement de manière à ce que sur deux côtés opposés de l'empilement on trouve alternativement une succession de bords **23** d'anode **21** découpée et de bords de cathode **24,** éventuellement revêtu d'électrolyte **22,** et éventuellement revêtu de la couche de matériau de liaison Ms **25.** La figure 2 montre un empilement de deux substrats **20,** l'un d'entre eux portant sur les deux faces une couche d'anode **21** revêtue d'une couche d'électrolyte **22,** et d'une couche de matériau de liaison Ms **25** sur une seule face de la couche d'électrolyte **22,** l'autre une couche de cathode **24** revêtue d'une couche d'électrolyte **22** et d'une couche de matériau de liaison Ms **25** sur les deux faces de la couche d'électrolyte **22,** les deux faces de la couche d'électrolyte **22** déposée respectivement sur l'anode **21** et la cathode **24** et revêtues chacune d'une couche de matériau de liaison Ms **25** étant posée l'une sur l'autre pour former une interface commune **26.**

A l'étape 10, on réalise un traitement thermique et/ou une compression mécanique favorisant le contact entre les deux couches empilées face sur face pour obtenir une batterie de structure empilée multicouches.

Dans un mode de réalisation particulier, il est avantageux, de préférence après l'empilement et avant l'ajout des terminaisons, d'encapsuler l'empilement en déposant une couche de céramique ou en vitrocéramique pour assurer la protection de la cellule de la batterie vis-à-vis de l'atmosphère. Ces couches d'encapsulation doivent être stables chimiquement, résister aux fortes températures et être imperméables à l'atmosphère (couche barrières). Ces couches peuvent être avantageusement déposées par dépôt chimique en phase vapeur (CVD), ce qui permet d'avoir un recouvrement de l'ensemble des surfaces de l'empilement accessibles. Ainsi, l'encapsulation peut ainsi réalisée directement sur les empilements, le revêtement pouvant pénétrer dans l'ensemble des cavités disponibles. Avantageusement, une seconde couche d'encapsulation peut être déposée sur la première couche d'encapsulation pour augmenter la protection des cellules batteries de leur environnement externe. Typiquement, le dépôt de cette seconde couche peut être réalisé par une imprégnation de silicone. Le choix d'un tel matériau vient du fait qu'il résiste à des températures élevées et la batterie peut ainsi être assemblée aisément par soudure sur des cartes électroniques sans apparition de transitions vitreuses.

Avantageusement, l'encapsulation de la batterie est réalisée sur quatre des six faces de l'empilement. Les couches d'encapsulation entourent la périphérie de l'empilement, le reste de la protection à l'atmosphère étant assuré par les couches obtenues par les terminaisons.

Une fois l'empilement réalisé, et après l'étape d'encapsulation de l'empilement si cette dernière est réalisée, des terminaisons (contacts électriques) **35,36** sont ajoutées au niveau où les collecteurs de courant cathodiques, respectivement anodiques sont apparents (non revêtus d'électrolyte isolant). Ces zones de contact peuvent être sur les côtés opposés de l'empilement pour collecter le courant ainsi que cela est représenté sur la figure 3, mais également sur les mêmes côtés ou sur des côtés adjacents.

Pour réaliser les terminaisons **35,36,** l'empilement, éventuellement enrobé, est découpé suivant des plans de coupe permettant d'obtenir des composants de batterie unitaires, avec la mise à nue sur chacun des plans de coupe des connexions (+) et (-) de la batterie. Les connexions peuvent ensuite être métallisées à l'aide de techniques de dépôt plasma connu de l'homme du métier. Les terminaisons **35,36** sont de préférence constituées d'une couche d'étain à l'extérieur afin de faciliter la soudabilité de la batterie, et d'une couche de nickel en dessous de la couche d'étain afin de protéger thermiquement la cellule batterie.

Ainsi, le procédé selon l'invention permet la réalisation de batteries entièrement solides, tridimensionnelles, constituées de plusieurs cellules élémentaires, ces dernières étant connectées toutes entre elles en parallèle.

Le procédé de fabrication selon l'invention comprend de nombreux avantages car :
(i) il permet de réaliser des batteries compactes, entièrement solides sans avoir recours à des températures élevées ;
(ii) les faibles températures de mises en oeuvre limitent les risques d'interdiffusion ou de réactions à l'état solide au niveau des interfaces ;
(iii) le procédé permet de réaliser des batteries entièrement solides, sans risque de fissures liées au retreint des électrodes et des couches d'électrolyte lors de l'étape d'assemblage ;
(iv) le procédé selon l'invention permet de fabriquer des batteries compactes, entièrement solides par assemblage de cellules élémentaires. En effet, le procédé selon l'invention permet de réaliser des assemblages tridimensionnels de cellules de batteries entièrement solides. Cet assemblage en une seule étape de toutes les cellules permet de réaliser une batterie tout solide monobloc constituée de plusieurs cellules élémentaires connectées toutes entre elles en parallèles. Les cellules élémentaires ne sont pas indépendantes les unes des autres.

Le procédé selon l'invention permet également de s'affranchir de l'utilisation de substrats rigides, la rigidité étant conférée par l'empilement et l'assemblage tout solide de la structure. En outre, cette technologie de fabrication permet de travailler directement sur des films métallisés de très faibles épaisseurs, ce qui permet d'obtenir des cellules batteries de très fortes densités d'énergie et de puissance.

De plus, cette technologie permet de fabriquer des batteries totalement sécurisées, sans risque de court-circuit interne et dotées de faibles autodécharges.

Enfin, les batteries obtenues selon le procédé sont dotées de fortes densités d'énergie et de puissance et peuvent fonctionner dans des conditions extrêmes de températures sans que leurs propriétés physique et chimique ne soient altérées.

### 3. Exemples

L'invention est illustrée ci-dessus par deux exemples (exemples 1 et 2) qui cependant ne limitent aucunement l'invention. L'exemple 1 décrit un procédé pour obtenir une batterie comprenant une cellule multicouche dont les substrats, qui agissent comme collecteurs de courant anodique ou cathodique, sont en aluminium. L'exemple 2 décrit un procédé pour obtenir une batterie comprenant une cellule multicouche dont les substrats, qui agissent comme collecteurs de courant anodique ou cathodique, sont en cuivre ; lequel procédé comprend en outre une étape d'encapsulation de la cellule multicouche.

### 3.1 Exemple 1

### a) Préparation du substrat

On approvisionne un feuillard d'aluminium de 15 µm d'épaisseur. Le feuillard est placé dans un dérouleur et positionné sur un cadre de maintien, de manière à créer une structure rigide de maintien du feuillard en aluminium sans le froisser. Ce cadre de maintien présente une surface externe isolante ; en revanche, ses surfaces internes conductrices sont en contact électrique avec le feuillard en aluminium et permettent de lui imposer un potentiel.

### b) Réalisation d'une suspension colloïdale de nanoparticules de Li₄Ti₅O₁₂ / Dépôt de la couche d'anode / Dépôt d'une couche d'électrolyte sur la couche d'anode

Afin de réaliser une électrode anodique sur le substrat d'aluminium préalablement préparé, on a réalisé une suspension colloïdale dans l'éthanol de nanoparticules de la composition chimique suivante : 2g/l de Li₄Ti₅O₁₂, 0,02g/l de poudre de noir de carbone, 0,3g/l de Li_{1,3}Al_{0,3}Ti_{1,7}(PO₄)₃ et quelques ppm d'acide citrique. Les tailles des particules dans cette suspension colloïdale sont comprises entre 20 et 70 nm. A partir de cette suspension colloïdale, on réalise un dépôt par électrophorèse des nanoparticules contenues dans ladite suspension sur le substrat d'aluminium. Le dépôt de la couche d'anode est réalisé sous une tension de 80V. Une fois séché en étuve, ce dépôt a été consolidé par un traitement thermique à 400°C sous 40 MPa de pression uniaxiale.

Une fois l'électrode anodique réalisée, on dépose à sa surface par électrophorèse une couche d'électrolyte à partir d'une suspension de Li_{1,3}Al_{0,3}Ti_{1,7}(PO₄)₃. Il s'agit d'une suspension de particules de Li_{1,3}Al_{0,3}Ti_{1,7}(PO₄)₃ à 10g/l dans l'éthanol. Les tailles des particules sont de 30 nm et les conditions de dépôt sont de 10 V pendant 30 secondes, ce qui permet d'obtenir un film d'environ 0,5 µm d'épaisseur. La couche d'électrolyte est ensuite séchée et pressé sous 50 MPa.

### c) Réalisation d'une suspension colloïdale de nanoparticules de LiMn_{1,5}Ni_{0,4}Cr_{0,1}O₄/ Dépôt de la couche de cathode / Dépôt d'une couche d'électrolyte sur la couche d'anode

Sur un deuxième feuillard, on réalise une électrode positive par dépôt électrophorétique d'une suspension de nanoparticules de LiMn_{1,5}Ni_{0,4}Cr_{0,1}O₄. La suspension de LiMn_{1,5}Ni_{0,4}Cr_{0,1}O₄ dans l'acétone a été réalisée avec une concentration égale à 5 g/l de nanoparticules de LiMn₁₅Ni_{0,4}Cr_{0,1}O₄ avec quelques ppm d'un stabilisant de type acétylacétone. Les conditions de dépôt utilisées sont de 100 V pendant 30 secondes afin d'obtenir une couche de cathode. Après séchage, la couche a été consolidée par un traitement de compression uniaxiale à chaud sous 300°C et 50 MPa.

Une fois l'électrode cathodique réalisée, on dépose sur sa surface une couche d'électrolyte par électrophorèse d'une suspension de Li_{1,3}Al_{0,3}Ti_{1,7}(PO₄)₃. Il s'agit d'une suspension de particules de Li_{1,3}Al_{0,3}Ti_{1,7}(PO₄)₃ à 10g/l dans l'éthanol. Les tailles des particules sont de 30 nm et les conditions de dépôt sont de 10 V pendant 30 secondes, ce qui permet d'obtenir un film d'environ 0,5 µm d'épaisseur. Ce film d'électrolyte est ensuite séché et pressé sous 50 MPa.

### d) Dépôt d'une couche de matériau de liaison Ms

Afin de faciliter la réalisation de l'assemblage des deux demi-électrodes au niveau des deux surfaces d'électrolyte solide, on dépose préalablement sur chacune desdites surfaces des nanoparticules de Li₃PO₄. Ce dépôt est réalisé en immergeant les électrodes revêtues d'électrolyte dans une suspension de nanoparticules de Li₃PO₄ dans l'éthanol. Les tailles des particules sont d'environ 15 nm. Les électrodes revêtues des films d'électrolyte solide sont trempées dans la suspension colloïdale de Li₃PO₄ et retirées à une vitesse de 100 mm/min. L'épaisseur déposée est alors de 50 nm.

### e) Assemblage des demi-électrodes

L'assemblage entre les deux demi-électrodes a été réalisée par traitement de recuit sous 80M Pa, avec une vitesse de montée en température de 100°C/min jusqu'à 350°C, suivi d'un maintien à cette température pendant cinq minutes avant de refroidir l'ensemble. Enfin, les deux demi-électrodes sont assemblées face sur face par un traitement thermique sous pression.

### 3.2 Exemple 2

### a) Préparation du substrat :

On approvisionne un feuillard de cuivre de 5 µm d'épaisseur, dont les surfaces lisses ont été rendues lisses préalablement par électropolissage, revêtues par d'un film mince de 100 nm de Chrome (Cr) réalisé par métallisation. Le substrat est ensuite placé dans un dérouleur et positionné sur un cadre de maintien, de manière à créer une structure rigide de maintien du feuillard sans le froisser. Ce cadre de maintien présente une surface externe isolante ; en revanche, ses surfaces internes conductrices sont en contact électrique avec le feuillard de cuivre revêtu de chrome et permettent de lui imposer un potentiel.

### b) Réalisation d'une suspension colloïdale de nanoparticules de Li₄Ti₅O₁₂ / dépôt de la couche d'anode / dépôt d'une couche d'électrolyte sur la couche d'anode :

Afin de réaliser une électrode anodique sur le substrat préalablement préparé, on a réalisé une suspension colloïdale dans l'éthanol de nanoparticules de composition chimique suivante: 10 g/l de nanopoudres de Li₄Ti₅O₁₂ avec quelques ppm (<10 ppm) d'acide citrique.

Les tailles de particules de cette suspension sont comprises entre 20 et 70 nm. A partir de cette suspension colloïdale, on a réalisé un dépôt par électrophorèse des nanoparticules contenues dans ladite suspension sur le substrat. Le dépôt de la couche d'anode a été réalisé à une tension de 90 V/cm. Le dépôt a été séché et consolidé à 450°C pendant 10 minutes.

Une fois l'anode réalisée, on a déposé à sa surface une couche d'électrolyte solide par électrophorèse à partir d'une suspension colloïdale de nanoparticules de Li_{3,6}Si_{0,6}P_{0,4}O₄. Cette suspension a été réalisée dans l'éthanol, avec un extrait sec de 10g/l et les tailles de particules sont de l'ordre de 30 nm. Ce film a été déposé sous 30 V pendant 10 secondes. Le film d'électrolyte a été séché et consolidé par un traitement thermique à 300°C pendant 10 minutes.

### c) Réalisation d'une suspension colloïdale de nanoparticules de LiMn_{1,5}Ni_{0,5}O₄:

Sur un deuxième feuillard, on a réalisé une électrode positive par dépôt électrophorétique d'une suspension de nanoparticules de LiMn_{1,5}Ni_{0,5}O₄. La suspension colloïdale a été réalisée dans un mélange de solvant 5 :1 (butanone : éthanol) avec quelques ppm d'acetyl-acétone (< 10 ppm) comme stabilisant et un extrait sec de 10 g/l. Les conditions de dépôt utilisées étaient de 150 V/cm pendant quelques secondes afin d'obtenir une couche de cathode, qui a été ensuite séchée et consolidée par un traitement thermique à 450°C pendant 10 minutes.

### d) Dépôt d'une couche de matériau de liaison Ms :

Afin de faciliter la réalisation de l'assemblage des deux demi-électrodes au niveau des deux surfaces d'électrolyte solide, on a déposé préalablement sur la cathode des nanoparticules de Li_{3,6}Si_{0,6}P_{0,4}O₄. Ce dépôt a été réalisé en immergeant la cathode dans une suspension de nanoparticules de Li_{3,6}Si_{0,6}P_{0,4}O₄ dans l'éthanol. Les tailles de particules sont de l'ordre de 20 nm. La cathode a été trempée dans la suspension colloïdale de Li_{3,6}Si_{0,6}P_{0,4}O₄ et retirée à une vitesse de 100 mm/min. L'épaisseur déposée est de l'ordre de 50 nm.

### e) Assemblage des demi-électrodes, pour réaliser des cellules multicouches :

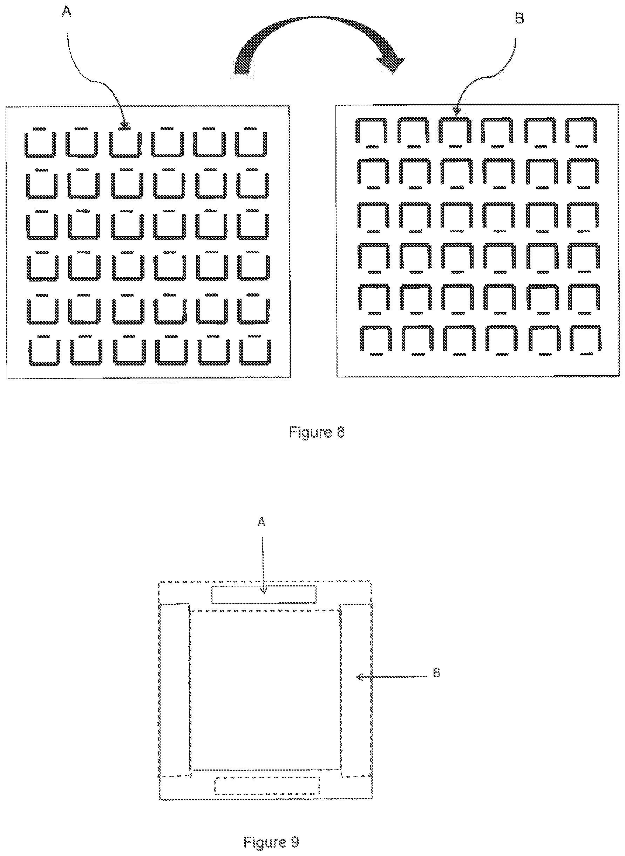

Avant d'être empilées, les anodes revêtues du film d'électrolyte solide et les cathodes ont été « poinçonnée » afin de réaliser des découpes aux dimensions de la batterie à réaliser. Ces motifs (cf. figures 8 et 9, repères B) comprennent les trois découpes qui se jouxtent et qui définissent la dimension de la batterie. Une deuxième fente (cf. figures 8 et 9, repère A) a été réalisée sur le côté non découpé afin de pouvoir assurer le passage des produits nécessaires à l'encapsulation du composant.

Le dépôt de matériau de liaison Ms pouvant être réalisé après ou avant cette étape de poinçonnage des électrodes. Les électrodes anodiques et cathodiques ont ensuite été empilées de manière alternée afin de constituer un empilement de plusieurs cellules élémentaires. Les motifs de découpes des anodes et cathodes ont été placés en configuration « tête bêche » comme illustré sur la figure 9. Cet empilement a ensuite été pressé à 50 MPa et chauffé à 350°C pendant 10 minutes afin d'obtenir une structure empilée multicouches monobloc et rigide.

Cet ensemble de feuilles empilées a ensuite été placé dans une chambre de dépôt sous vide afin de réaliser un dépôt conformai d'un matériau protecteur d'encapsulation qui va recouvrir la totalité des surfaces de cet empilement, y comprise à l'intérieur des zones découpées. Les orifices A (cf. figures 8 et 9) favorisent la pénétration du matériau déposé sur les faces internes des couches empilées. Ce matériau protecteur peut être un revêtement d'hexaméthyldisiloxane (HMDSO) déposé par dépôt chimique en phase vapeur assisté par plasma. Cette première couche de revêtement permet de protéger la cellule batterie de l'environnement extérieur et plus particulièrement de l'humidité. Une seconde couche de 15 µm de silicone est ensuite appliquée par injection afin d'enrober les cellules batteries d'une couche qui protégera les batteries d'endommagement mécaniques.

Cet ensemble d'éléments de batteries, empilées et enrobées est ensuite découpé suivant les plans de coupe permettant d'obtenir des composants de batterie unitaires, avec la mise à nue sur chacun des plans de coupe des connexions (+) et (-) de la batteries, sur des faces opposées. Ces connexions sont ensuite métallisées à l'aide de techniques de dépôt plasma afin d'obtenir le composant batterie illustré figure 10. Les terminaisons sont constituées d'une couche de nickel protégeant thermiquement la cellule batterie et une couche d'étain facilitant la soudabilitié de la batterie obtenue.

## Revendications

1. Procédé de fabrication de batteries entièrement solides, lesdites batteries comprenant au moins une couche contenant des matériaux d'anode, couche d'anode, au moins une couche contenant des matériaux d'électrolyte solide, couche d'électrolyte, et au moins une couche contenant des matériaux de cathode, couche de cathode, formant une cellule élémentaire, chacune de ces trois couches étant déposée par électrophorèse, procédé dans lequel on empile face sur face deux couches obtenues par électrophorèse pour obtenir une batterie entièrement solide multicouches constituée d'un assemblage de plusieurs cellules élémentaires connectées entre elles en parallèle, ledit procédé étant **caractérisé en ce qu'**avant l'empilement face sur face desdites couches obtenues par électrophorèse on dépose une couche de matériau de liaison Ms sur la face d'au moins une desdites deux couches obtenues par électrophorèse qui seront empilées face surface.

2. Procédé selon la revendication 1 comprenant les étapes successives suivantes :
a) on dépose une couche d'anode et une couche de cathode chacune sur son substrat conducteur, de préférence une feuille ou bande métallique ou feuille ou bande ou film isolant métallisé, lesdits substrats conducteurs, ou leurs éléments conducteurs, pouvant servir comme collecteur de courant anodique et cathodique respectivement ;
b) on dépose une couche d'électrolyte solide sur au moins une des deux couches obtenues à l'étape a) ;
c) on dépose une couche de matériau de liaison Ms sur l'une au moins des couches obtenues à l'étape a) et/ou b) ;
d) on empile face sur face la couche obtenue à l'étape c) avec une couche obtenue à l'étape a), b) ou c), et on effectue un traitement thermique et/ou une compression mécanique favorisant le contact entre lesdites deux couches empilées face sur face pour obtenir un assemblage multicouches entièrement solide et monobloc de cellules élémentaires pouvant fonctionner comme une batterie.

3. Procédé selon la revendication 1 ou 2, **caractérisé en ce que** le dépôt de la couche de matériau de liaison Ms est réalisé parmi l'une des techniques suivantes :
i. technique de dépôt sous vide, et plus particulièrement par dépôt physique par phase vapeur, dépôt chimique par phase vapeur, ou dépôt chimique en phase vapeur assisté par plasma ;
ii. technique de dépôt de type sol-gel ;
iii. technique de dépôt par trempe de nanoparticules, plus particulièrement techniques d'encrage, de trempé, de centrifugation (spin-coating), Langmuir-Blodgett ;
iv. technique d'électropulvérisation (electrospraying);
v. technique de dépôt par aérosol ; ou
vi. technique de dépôt par électrophorèse.

4. Procédé selon l'une quelconque des revendications 1 à 3, **caractérisé en ce que** lorsque on réalise un dépôt d'une couche d'électrolyte solide sur au moins une des deux couches obtenues à l'étape a), l'épaisseur de la couche de matériau de liaison Ms obtenue à l'étape c) est inférieure à 100 nm, de préférence inférieure à 50 nm, et encore plus préférentiellement inférieure à 30 nm.

5. Procédé selon l'une quelconque des revendications 1 à 4, **caractérisé en ce que** la compression mécanique de l'étape d) est réalisée à une pression comprise entre 10 et 100 MPa, de préférence entre 10 et 50 MPa.

6. Procédé selon l'une quelconque des revendications 1 à 5, **caractérisé en ce que** le traitement thermique de l'étape d) est réalisé à une température T_{R} qui, de préférence, ne dépasse pas 0,7 fois la température de fusion ou de décomposition exprimée en °C, et plus préférentiellement ne dépasse pas 0,5 fois et encore plus préférentiellement ne dépasse pas 0,3 fois la température de fusion ou de décomposition exprimée en °C du au moins un matériau de liaison Ms le plus fusible soumis à ladite étape de densification thermique.

7. Procédé selon l'une quelconque des revendications 1 à 6, **caractérisé en ce que** le matériau de liaison Ms est choisi parmi un ou plusieurs des matériaux suivants :
a) les matériaux à base d'oxydes choisis parmi Li_{3,6}Ge_{0,6}V_{0,4}O₄ ; Li₂O-Nb₂O₅ ; LiSiO₄ ; Li₂O ; Li₁₄Zn(GeO₄)₄ ; Li_{0,35}La_{0,55}TiO₃ ; Li_{0,5}La_{0,5}TiO₃; Li₇La₃Zr₂O₁₂ ; Li₅₊ₓLa₃(Zrₓ,A₂₋ₓ)O₁₂ avec A=Sc, Ti, V, Y, Nb, Hf, Ta, Al, Si, Ga, Ge, Sn et 1,4 ≤ x ≤ 2;
b) les matériaux à base de nitrures ou d'oxynitrures choisis parmi Li₃N; Li₃PO₄₋ₓN_{2x/3}, Li₄SiO₄₋ₓN_{2x/3}, Li₄GeO₄₋ₓN₂ₓ₁₃ avec 0 ≤ x < 4 ou Li₃BO₃₋ₓN_{2x/3} avec 0 < x < 3 ; les matériaux à base d'oxynitrures de lithium et de phosphore (appelés LiPON) pouvant également contenir du silicium (appelés LiSiPON), du bore (appelés LiPONB), du soufre (appelés LiPONS) ou de l'aluminium (appelés LiPAON) ou une combinaison d'aluminium, bore, soufre et/ou silicium ; les matériaux à base d'oxynitrures de lithium et de bore (appelés LiBON) pouvant également contenir du silicium (appelés LiSiBON), du soufre (appelés LiBONS) ou de l'aluminium (appelés LiBAON) ou une combinaison d'aluminium, soufre et silicium ; et plus particulièrement les matériaux du type LiₓPO_{y}N_{z} avec x ∼2,8 et 2y = 3z avec 0,16 ≤ z ≤ 0,46 ; ou Li_{w}POₓN_{y}S_{z} avec (2x+3y+2z) = (5+w) et 3,2 ≤ x ≤ 3,8 ; 0,13 ≤ y ≤ 0,4 ; 0 ≤ z ≤ 0,2 ; 2,9 ≤ w ≤ 3,3 ; ou LiₜPₓAl_{y}OᵤNᵥS_{w} avec (5x+3y) =5 ; (2u+3v+2w) = (5+t) ; 2,9≤ t ≤3,3 ; 0,84≤ x ≤0,94 ; 0,094≤ y ≤0,26 ; 3,2≤ u ≤3,8 ; 0,13≤ v ≤0,46 ; 0≤ w ≤0,2 ; ou Li₁₉Si_{0,2}P_{1,0}O_{1,1}N₁₀ ; ou Li_{2,9}PO_{3,3}N_{0,46} ;
c) les matériaux à base de sulfure choisis parmi LiₓM_{1-y}M'_{y}S₄ avec M=Si, Ge, Sn et M'=P, Al, Zn, Ga, Sb ; Li₂S ; B₂S₃ ; P₂S₅ ; 70Li₂S-30P₂S₅ ; Li₇P₃S₁₁ ; Li₁₀GeP₂S₁₂ ; Li₇PS₆ ; Li_{3,25}Ge_{0,25}P_{0,75}S₄ ; Li₁₀MP₂S₁₂ avec M = Si, Ge, Sn et les mélanges entre Li₂S et un des composés parmi P₂S₅, GeS₂, Ga₂S₃ ou SiS₂ ;
d) les matériaux à base de phosphate ou de borate choisis parmi Li₃PO₄ ; LiTi(PO₄)₃ ; Li₁₊ₓAlₓM₂₋ₓ(PO₄)₃ (où M = Ge, Ti, et/ou Hf et où 0 < x < 1) ; Li_{1,3}Al_{0,3}Ti_{1,7}(PO₄)₃ ; Li_{1+x+y}AlₓTi₂₋ₓSi_{y}P_{3-y}O₁₂ (où 0 ≤ x ≤ 1 et 0 ≤ y ≤ 1); Li_{1+x+z}Mx(Ge_{1-y}Ti_{y})₂₋ₓSi_{z}P_{3-z}O₁₂ (où 0 ≤ x ≤ 0,8, 0 ≤ y ≤ 1,0, 0 ≤ z ≤ 0,6) ; 2(Li_{1,4}Ti₂Si_{0,4}P_{2,6}O₁₂)-AlPO₄ ; LiₓAl_{z-y}Ga_{y}S_{w}(PO₄)_{c} ou LiₓAl_{z-y}Ga_{y}S_{w}(BO₃)_{c} ou LiₓGe_{z-y}Si_{y}S_{w}(PO₄)_{c} ou LiₓGe_{z-y}Si_{y}S_{w}(BO₃)_{c} ou d'une manière plus générale LiₓM_{z-y}M'_{y}S_{w}(PO₄)_{c} ou LiₓM_{z-y}M'_{y}S_{w}(BO₃)_{c} avec 4 < w < 20, 3 < x <10, 0 ≤ y ≤ 1, 1 ≤ z ≤ 4 et 0 < c < 20 et M ou M' un élément parmi Al, Si, Ge, Ga, P, Zn, Sb ;
e) les matériaux mixtes choisis parmi les mélanges entre Li₂S et un des composés parmi Li₃PO₄, Li₃PO₄₋ₓN_{2x/3}, Li₄SiO₄₋ₓN_{2x/3}, Li₄GeO₄₋ₓN_{2x/3} avec 0 < x < 4 ou Li₃BO₃₋ₓN_{2x/3} avec 0 < x < 3 ; les mélanges entre soit Li₂S et/ou B₂S₃, SiS₂, P₂S₅, GeS₂, Ga₂S₃ et un composé du type LiₐMO_{b} qui peut être soit un silicate de lithium Li₄SiO₄, un borate de lithium Li₃BO₃ ou un phosphate de lithium Li₃PO₄.

8. Procédé selon l'une quelconque des revendications 1 à 7, **caractérisé en ce que** le matériau de liaison Ms comporte/est constitué d'au moins un polymère imprégné d'un sel de lithium, le polymère étant de préférence choisi dans le groupe formé par le polyéthylène oxyde, les polyimides, le polyfluorure de vinylidène, le polyacrylonitrile, le polyméthacrylate de méthyle, les polysiloxanes, et le sel de lithium étant de préférence choisi parmi LiCl, LiBr, Lil, Li(ClO₄), Li(BF₄), Li(PF₆), Li(AsF₆), Li(CH₃CO₂), Li(CF₃SO₃), Li(CF₃SO₂)₂N, Li(CF₃SO₂)₃, Li(CF₃CO₂), Li(B(C₆H₅)₄), Li(SCN), Li(NO₃).

9. Procédé selon l'une quelconque des revendications 1 à 8, **caractérisé en ce qu'**il comprend en outre une étape d'encapsulation de la batterie par dépôt d'au moins une couche d'encapsulation.

10. Batterie entièrement solide susceptible d'être fabriquée par le procédé selon l'une quelconque des revendications 1 à 9.

11. Batterie selon la revendication 10, **caractérisée en ce que** les substrats conducteurs de courant d'anode de courant de cathode sont des feuilles métalliques, de préférence en aluminium ou en cuivre, éventuellement revêtues d'un métal noble, ou des feuilles polymères, de préférence sélectionnées parmi les polymères suivants : le polynaphtalate d'éthylène (PEN), polytéréphtalate d'éthylène (PET), le polypropylène (PP), le Téflon® (PTFE), le polyimide (PI), et plus particulièrement le Kapton®, éventuellement revêtues d'un métal noble, ou des feuilles de graphite, éventuellement revêtues d'un métal noble, ledit métal noble étant de préférence sélectionné parmi les métaux suivants : l'or, le platine, le palladium, le vanadium, le cobalt, le nickel, le manganèse, de niobium, le tantale, le chrome, le molybdène, le titane, le zirconium, le tungstène ou tout alliage comprenant au moins un de ces métaux.

12. Batterie selon l'une quelconque des revendications 10 ou 11, **caractérisée en ce qu'**elle comprend au moins une couche d'encapsulation, de préférence une couche en céramique ou en vitrocéramique, et de préférence, une deuxième couche d'encapsulation déposée sur ladite première couche d'encapsulation, cette deuxième couche étant de préférence en polymère siliconé.

13. Batterie selon la revendication 12, **caractérisée en ce que** ladite au moins une couche d'encapsulation revêt quatre des six faces de ladite batterie.

14. Batterie selon l'une quelconque des revendications 10 à 13, **caractérisée en ce qu'**elle comprend des terminaisons (35,36) au niveau où les collecteurs de courant cathodique, respectivement anodique, sont apparents, les terminaisons étant de préférence revêtues en outre d'une couche de nickel au contact des cellules électrochimiques, ladite couche de nickel étant revêtue d'une couche d'étain.

15. Batterie selon la revendication 14, **caractérisée en ce que** les connexions anodiques et les connexions cathodiques se trouvent sur les côtés opposés de l'empilement.

## Patentansprüche

1. Verfahren zur Herstellung von vollständig festen Batterien, wobei die Batterien mindestens eine Schicht umfassen, die Anodenmaterialien enthält, Anodenschicht, mindestens eine Schicht, die Festelektrolytmaterialien enthält, Elektrolytschicht, und mindestens eine Schicht, die Kathodenmaterialien enthält, Kathodenschicht, die eine Elementarzelle bilden, wobei jede dieser drei Schichten durch Elektrophorese abgeschieden wird, ein Verfahren, bei dem zwei durch Elektrophorese erhaltene Schichten aufeinander gestapelt werden, um eine vollständig feste Mehrschichtbatterie zu erhalten, die aus einer Anordnung mehrerer Elementarzellen, die parallel miteinander verbunden sind, besteht, wobei das Verfahren **dadurch gekennzeichnet ist, daß** vor dem Aufeinanderstapeln der durch Elektrophorese erhaltenen Schichten eine Schicht aus Verbindungsmaterial Ms auf die Fläche von mindestens einer der genannten, durch Elektrophorese erhaltenen Schichten aufgetragen wird, die dann aufeinandergestapelt werden.

2. Verfahren nach Anspruch 1, umfassend die folgenden aufeinanderfolgenden Schritte:
a) Abscheiden einer Anodenschicht und einer Kathodenschicht jeweils auf ihrem leitenden Substrat, vorzugsweise einer Metallfolie oder einem Metallband oder einer metallisierten Folie oder Band oder einem isolierenden, metallisierten Film, wobei die leitfähigen Substrate oder ihre leitenden Elemente jeweils als Anodenbeziehungsweise Kathodenstromkollektor dienen können;
b) Abscheiden einer Festelektrolytschicht auf mindestens einer der beiden in Schritt a) erhaltenen Schichten;
c) Abscheiden einer Schicht aus Verbindungsmaterial Ms auf mindestens einer der in Schritt a) und / oder b) erhaltenen Schichten;
d) die in Schritt c) erhaltene Schicht wird auf eine in Schritt a), b) oder c) erhaltene Schicht gestapelt und einer Wärmebehandlung und / oder mechanischen Kompression unterzogen, die den Kontakt zwischen den beiden aufeinandergestapelten Schichten begünstigt, um eine vollständig feste und monoblockige Mehrschichtanordnung von Elementarzellen zu erhalten, die als Batterie funktionieren können.

3. Verfahren nach Anspruch 1 oder 2, **dadurch gekennzeichnet, dass** das Aufbringen der Verbindungsmaterialschicht Ms durch eine der folgenden Techniken ausgeführt wird:
i. Vakuumabscheidungstechnik und insbesondere durch physikalische Dampfabscheidung, chemische Dampfabscheidung oder plasmaunterstützte chemische Dampfabscheidung;
ii. Sol-Gel-Abscheidungstechnik;
iii. Eintauch-Abscheidung von Nanopartikeln, insbesondere Techniken des Einfärbens, Eintauchens, Rotationsbeschichtens, Langmuir-Blodgett;
iv. Elektrospray-Technik (Elektrospraying);
v. Aerosolabscheidungstechnik; oder
vi. Ablagerungstechnik durch Elektrophorese.

4. Verfahren nach einem der Ansprüche 1 bis 3, **dadurch gekennzeichnet, dass** wenn eine Festelektrolytschicht auf mindestens einer der zwei in Schritt a) erhaltenen Schichten abgeschieden wird, die Dicke der Schicht des in Schritt c) erhaltenen Ms-Verbindungsmaterials weniger als 100 nm beträgt, vorzugsweise weniger als 50 nm und noch mehr bevorzugt weniger als 30 nm.

5. Verfahren nach einem der Ansprüche 1 bis 4, **dadurch gekennzeichnet, daß** die mechanische Kompression in Schritt d) bei einem Druck zwischen 10 und 100 MPa, vorzugsweise zwischen 10 und 50 MPa durchgeführt wird.

6. Verfahren nach einem der Ansprüche 1 bis 5, **dadurch gekennzeichnet, daß** die Wärmebehandlung in Schritt d) bei einer Temperatur T_{R} durchgeführt wird, die vorzugsweise das 0,7-fache der Schmelz oder Zersetzungstemperatur, ausgedrückt in ° C, nicht übersteigt, und vorzugsweise nicht das 0,5-fache, und noch bevorzugter nicht das 0,3-fache der Schmelz- oder Zersetzungstemperatur, ausgedrückt in ° C, des am leichtesten schmelzenden mindestens einen Bindemittels Ms übersteigt, das dem Schritt der thermischen Verdichtung unterworfen wird.

7. Verfahren nach einem der Ansprüche 1 bis 6, **dadurch gekennzeichnet, daß** das Verbindungsmaterial Ms aus einem oder mehreren der folgenden Materialien ausgewählt ist:
a) Materialien auf Oxid-Basis, ausgewählt aus: Li_{3.6}Ge_{0.6}V_{0.4}O₄; Li₂O-Nb₂O₅; LiSiO₄; Li₂O; Li₁₄Zn(GeO₄)₄; Li_{0.35}La_{0.55}TiO₃ ; Li_{0.5}La_{0.5}TiO₃; Li₇La₃Zr₂O₁₂; Li₅₊ₓLa₃ (Zrₓ,A₂₋ₓ)O₁₂) mit A=Sc, Ti, V, Y, Nb, Hf, Ta, Al, Si, Ga, Ge, Sn und 1.4 ≤ x ≤ 2;
b) Materialien auf Nitrid- oder Oxynitrid-Basis, ausgewählt aus: Li₃N; Li₃PO₄₋ₓN_{2x/3}, Li₄SiO₄₋ₓN_{2x/3}, Li₄GeO₄₋ₓN_{2x/3} with 0 < x 4 oder Li₃BO₃₋ₓN_{2x/3} mit 0 < x < 3; Materialien auf Lithium- und Phosphor-Oxynitrid-Basis (genannt LiPON), die ebenfalls enthalten können Silizium (genannt LiSiPON), Bor (genannt LiPONB), Schwefel (genannt LiPONS) oder Aluminum (genannt LiPAON) oder eine Kombination von Aluminum, Bor, Schwefel und/oder Silizium; Materialien auf Lithium- und Bor-Oxynitrid-Basis (genannt LiBON), die ebenfalls enthalten können Silizium (genannt LiSiBON),Schwefel (genannt LIBONS) oder Aluminum (genannt LiBAON) oder eine Kombination von Aluminum, Schwefel und Silizium; und spezifischer Materialien des Typs LiₓPO_{y}N_{z} mit x - 2.8 und 2y = 3z mit 0.16 ≤ z ≤ 0.46; oder Li_{w}POₓN_{y}S_{z} mit (2x+3y+2z) = (5+w) und 3.2 ≤ x ≤ 3.8; 0.13 ≤ y ≤ 0.4; 0 ≤ z ≤ 0.2; 2.9 ≤ w ≤ 3.3; oder LiₜPₓAl_{y}OᵤNᵥS_{w} mit (5x+3y) =5; (2u+3v+2w) = (5+t); 2.9 ≤ t 3.3; 0.84 ≤ x ≤ 0.94; 0.094 ≤ y ≤ 0.26; 3.2 ≤ u ≤ 3.8; 0.13 ≤ v ≤ 0.46; 0 ≤ w ≤ 0.2; oder Li_{1.9}Si_{0.2}P_{1.0}O_{1.1}N_{1.0}; oder Li_{2.9}PO_{3.3}N_{0.46};
c) Materialien auf Sulfid-Basis ausgewählt aus: LiₓM_{1-y}M'_{y}S₄ mit M=Si, Ge, Sn und M'=P, Al, Zn, Ga, Sb; Li₂S; B₂S₃; P₂S₅; 70Li₂S-30P₂S₅; Li₇P₃S₁₁; Li₁₀GeP₂S₁₂; Li₇PS₆; Li_{3.25}Ge_{0.25}P_{0.75}S₄; Li₁₀MP₂S₁₂ mit M = Si, Ge, Sn und Mischungen aus Li₂S und einer Verbindung aus P₂S_{5,} GeS₂, Ga₂S₃ oder SiS₂;
d) Materialien auf Phosphat- oder Borat-Basis ausgewählt aus Li₃PO₄; LiTi(PO₄)₃; Li₁₊ₓAlₓM₂₋ₓ(PO₄)₃ (worin M = Ge, Ti, und/oder Hf und worin 0 < x 1) ; Li_{1.3}Al_{0.3}Ti_{1.7}(PO₄)₃; Li_{1+x+y}AlₓTi₂₋ₓSi_{y}P_{3-y}O₁₂ (worin 0 ≤ x ≤ 1 und 0 ≤ y ≤ 1); Li_{1+x+z}Mx (Ge_{1-y}Ti_{y})₂₋ₓSi_{z}P_{3-z}O₁₂ (worin 0 ≤ x ≤ 0. 8, 0 ≤ y ≤ 1.0, 0 ≤ z ≤ 0. 6) ; 2 (Li_{1.4}Ti₂Si_{0.4}P_{2.6}O₁₂) -AlPO₄; LiₓAl_{z-y}Ga_{y}S_{w}(PO₄)_{c} oder LiₓAl_{z-y}Ga_{y}S_{w}(BO₃)_{c} oder LiₓGe_{z-y}Si_{y}S_{w}(PO₄⁻)_{c} oder LiₓGe_{z-y}Si_{y}S_{w}(BO₃)_{c} oder allgemeiner LiₓM_{z-y}M'_{y}S_{w}(PO₄)_{c} oder LiₓM_{z-y}M'_{y}Sw(BO₃)_{c} mit 4 < w < 20, 3 < x < 10, 0 ≤ y ≤ 1 , 1 ≤ z ≤ 4 und 0 < c < 20 und M oder M' ein Element aus Al, Si, Ge, Ga, P, Zn, Sb;
e) gemischte Materialien ausgewählt aus Li₂S und einer der Verbindungen aus Li₃PO₄, Li₃PO₄₋ₓN_{2x/3}, Li₄SiO₄₋ₓN_{2x/3}, Li₄GeO₄₋ₓN_{2x/3} mit 0 < x < 4 oder Li₃BO₃₋ₓN_{2x/3} mit 0 < x < 3; Mischungen aus Li₂S und/oder B₂S₃ SiS₂, P₂S_{5,} GeS₂, Ga₂S₃ und einer Verbindung des Typs LiₐMO_{b} , die ein Lithiumsilikat Li₄SiO₄, ein Lithiumborat Li₃BO₃ oder ein Lithiumphosphat Li₃PO₄ sein kann.

8. Verfahren nach einem der Ansprüche 1 bis 7, **dadurch gekennzeichnet, dass** das Bindematerial Ms mindestens ein mit einem Lithiumsalz imprägniertes Polymer enthält oder aus ihm besteht, wobei das Polymer vorzugsweise ausgewählt ist aus der Gruppe bestehend aus Polyethylenoxid, Polyimiden, Polyvinylidenfluorid, Polyacrylnitril, Polymethylmethacrylat, Polysiloxanen, und wobei das Lithiumsalz vorzugsweise ausgewählt ist aus LiCl, LiBr, LiL, Li(ClO₄) , Li(BF₄) , Li(PF₆), LiAsF₆) , Li(CH₃CO₂), Li(CF₃SO₃), Li(CF₃SO₂)₂N, Li(CF₃SO₂)₃, Li(CF₃CO₂), Li(B(C₆H₅)₄), Li(SCN), Li(NO₃).

9. Verfahren nach einem der Ansprüche 1 bis 8, **dadurch gekennzeichnet, dass** es ferner einen Schritt des Einkapselns der Batterie durch Abscheiden mindestens einer Verkapselungsschicht umfasst.

10. Vollständig feste Batterie, die mit dem Verfahren nach einem der Ansprüche 1 bis 9 hergestellt werden kann.

11. Batterie nach Anspruch 10, **dadurch gekennzeichnet, daß** die den Kathoden- und Anodenstrom leitenden Substrate Metallfolien sind, die gegebenenfalls mit einem Edelmetall beschichtet sind, oder Polymerfilme, die vorzugsweise aus den folgenden Polymeren ausgewählt sind: Ethylenpolynaphthalat (PEN), Polyethylenterephthalat (PET), Polypropylen (PP), Teflon® (PTFE), Polyimid (PI) und insbesondere Kapton®, die gegebenenfalls mit einem Edelmetall beschichtet sind, oder Graphitfolien sind, gegebenenfalls mit einem Edelmetall beschichtet, wobei jenes Edelmetall ausgewählt ist aus den folgenden Metallen: Gold, Platin, Palladium, Vanadium, Kobalt, Nickel, Mangan, Niob, Tantal, Chrom, Molybdän, Titan, Palladium, Zirkonium, Wolfram oder jedwede Legierung, die mindestens eines dieser Metalle enthält.

12. Batterie nach einem der Ansprüche 10 oder 11, **dadurch gekennzeichnet, dass** sie mindestens eine Verkapselungsschicht, vorzugsweise eine keramische oder glaskeramische Schicht, umfasst, und vorzugsweise eine zweite Verkapselungsschicht umfasst, die auf der ersten Verkapselungsschicht abgeschieden ist, wobei diese zweite Verkapselungsschicht vorzugsweise aus Silikonpolymer besteht.

13. Batterie nach Anspruch 12, **dadurch gekennzeichnet, daß** die mindestens eine Verkapselungsschicht vier der sechs Seiten der Batterie abdeckt.

14. Batterie nach einem der Ansprüche 10 bis 13, **dadurch gekennzeichnet, daß** sie Anschlüsse (35, 36) dort aufweist, wo die Anoden- und Kathodenstromkollektoren sichtbar sind, wobeidiese Kollektoren vorzugsweise mit einer Nickelschicht in Kontakt mit den elektrochemischen Zellen beschichtet sind, wobei die Nickelschicht mit einer Zinnschicht überzogen ist.

15. Batterie nach Anspruch 14, **dadurch gekennzeichnet, dass** sich die Anoden- und die Kathodenanschlüsse auf den gegenüberliegenden Seiten des Stapels befinden.

## Claims

1. Method for producing all-solid batteries, said batteries including at least one layer containing anode materials, anode layer, at least one layer containing solid electrolyte materials, electrolyte layer, and at least one layer containing cathode materials, cathode layer, forming an elementary cell, each of said three layers being deposited by electrophoresis, method wherein are stacked face-to-face two layers obtained by electrophoresis in order to obtain an all-solid multilayer battery consisting of an assembly of a plurality of elementary cells connected with one another in parallel, said method being **characterized in that**, prior to the face-to-face stacking of said layers obtained by electrophoresis, a layer of Ms bonding material is deposited on the face of at least one of said two layers obtained by electrophoresis, which will be stacked face-to-face.

2. Method according to claim 1, including the following successive steps:
a) an anode layer and a cathode layer are each deposited on their respective conductive substrates, preferably a metal sheet or strip or a metallized insulating sheet or strip or film, said conductive substrates, or the conductive elements thereof, being capable of serving as an anode and cathode current collector, respectively;
b) a solid electrolyte layer is deposited on at least one of the two layers obtained in step a);
c) an Ms bonding material layer is deposited on at least one of the layers obtained in step a) and /or b);
d) the layer obtained in step c) is stacked face-to-face with a layer obtained in step a), b) or c) in order to obtain a stack, and a thermal treatment and/or mechanical compression promoting contact between said two layers stacked face-to-face is performed in order to obtain an all-solid and one-piece multilayer assembly of elementary cells, capable of operating as a battery.

3. Method according to claim 1 or 2, **characterized in that** the deposition of the Ms bonding material layer is performed by one of the following techniques:
i. vacuum deposition technique, and more specifically physical vapor deposition, chemical vapor deposition, or plasma-enhanced chemical vapor deposition;
ii. sol-gel deposition technique;
iii. suspended nanoparticle deposition technique, more specifically inking, dipping, centrifugation (spin-coating), and Langmuir-Blodgett techniques;
iv. electrospraying technique;
v. aerosol deposition technique; or
vi. electrophoresis deposition technique.

4. Method according to any one of claims 1 to 3, **characterized in that** when a solid electrolyte layer is deposited on at least one of the two layers obtained in step a), the thickness of the Ms bonding material layer obtained in step c) is below 100 nm, preferably below 50 nm and even more preferably below 30 nm.

5. Method according to any one of claims 1 to 4, **characterized in that** the mechanical compression of step d) is performed at a pressure of between 10 and 100 MPa, and preferably between 10 and 50 MPa.

6. Method according to any one of claims 1 to 5, **characterized in that** the thermal treatment of step d) is performed at a temperature T_{R} that, preferably, does not exceed 0.7 times the melting or decomposition temperature, expressed in °C, and more preferably does not exceed 0.5 times and even more preferably does not exceed 0.3 times the melting or decomposition temperature, expressed in °C, of the at least one most fusible Ms bonding material subjected to said thermal densification step.

7. Method according to any one of claims 1 to 6, **characterized in that** the Ms bonding material is chosen from one or more of the following materials:
a) oxide-based materials chosen from Li_{3.6}Ge_{0.6}V_{0.4}O₄; Li₂O-Nb₂O₅; LiSiO₄; Li₂O; Li₁₄Zn(GeO₄)₄; Li_{0.35}La_{0.35}TiO₃; Li_{0.5}La_{0.5}TiO₃; Li₇La₃Zr₂O₁₂; Li₅₊ₓLa₃(Zr_{x,}A₂₋ₓ)O₁₂) with A=Sc, Ti, V, Y, Nb, Hf, Ta, Al, Si, Ga, Ge, Sn and 1.4 ≤ x ≤ 2;
b) nitride- or oxynitride-based materials chosen from Li₃N; Li₃PO₄₋ₓN_{2x/3}, Li₄SiO₄₋ₓN_{2x/3}, Li₄GeO₄₋ₓN_{2x/3} with 0 < x 4 or Li₃BO₃₋ₓN_{2x/3} with 0 < x < 3; lithium and phosphorus oxynitride-based materials (called LiPON) that may also contain silicon (called LiSiPON), boron (called LiPONB), sulfur (called LiPONS) or aluminum (called LiPAON) or a combination of aluminum, boron, sulfur and/or silicon; the lithium and boron oxynitride-based materials (called LiBON) that may also contain silicon (called LiSiBON), sulfur (called (LIBONS) or aluminum (called LiBAON) or a combination of aluminum, sulfur and silicon; and more specifically materials of the LiₓPO_{y}N_{z} type with x - 2.8 and 2y = 3z with 0.16 ≤ z ≤ 0.46; or Li_{w}POₓN_{y}S_{z} with (2x+3y+2z) = (5+w) and 3.2 ≤ x ≤ 3.8; 0.13 ≤ y ≤ 0.4; 0 ≤ z ≤ 0.2; 2.9 ≤ w ≤ 3.3; or LiₜPₓAl_{y}OᵤNᵥS_{w} with (5x+3y) =5; (2u+3v+2w) = (5+t); 2.9 ≤ t 3.3; 0.84 ≤ x ≤ 0.94; 0.094 ≤ y ≤ 0.26; 3.2 ≤ u ≤ 3.8; 0.13 ≤ v ≤ 0.46; 0 ≤ w ≤ 0.2; or Li_{1.9}Si_{0.2}P_{1.0}O_{1.1}N_{1.0}; or Li_{2.9}PO_{3.3}N_{0.46};
c) sulfide-based materials chosen from: LiₓM_{1-y}M'_{y}S₄ with M=Si, Ge, Sn and M'=P, Al, Zn, Ga, Sb; Li₂S; B₂S₃; P₂S₅; 70Li₂S-30P₂S₅; Li₇P₃S₁₁; Li₁₀GeP₂S₁₂; Li₇PS₆; Li_{3.25}Ge_{0.25}P_{0.75}S₄; Li₁₀MP₂S₁₂ with M = Si, Ge, Sn and mixtures between Li₂S and one of the compounds among P₂S_{5,} GeS₂, Ga₂S₃ or SiS₂;
d) phosphate or borate-based materials chosen from Li₃PO₄ ; LiTi(PO₄)₃; Li₁₊ₓAlₓM₂₋ₓ(PO₄)₃ (in which M = Ge, Ti, and/or Hf and in which 0 < x 1); Li_{1.3}Al_{0.3}Ti_{1.7}(PO₄)₃; Li_{1+x+y}AlₓTi₂₋ₓSi_{y}P_{3-y}O₁₂ (in which 0 ≤ x ≤ 1 and 0 ≤ y ≤ 1) ; Li_{1+x+z}Mx(Ge_{1-y}Ti_{y})₂₋ₓSi_{z}P_{3-z}O₁₂ (in which 0 ≤ x ≤ 0.8, 0 ≤ y ≤ 1.0, 0 ≤ z ≤ 0.6); 2(Li_{1.4}Ti₂Si_{0.4}P_{2.6}O₁₂)-AlPO₄; LiₓAl_{z-y}Ga_{y}S_{w}(PO₄)_{c} or LiₓAl_{z-y}Ga_{y}S_{w}(BO₃)_{c} or LiₓGe_{z-y}Si_{y}S_{w}(PO₄)_{c} or LiₓGe_{z-y}Si_{y}S_{w}(BO₃)_{c} or more generally LiₓM_{z-y}M'_{y}Sw(PO₄)_{c} or LiₓM_{z-y}M'_{y}Sw(BO₃)_{c} with 4 < w < 20, 3 < x < 10, 0 ≤ y ≤ 1 1 ≤ z ≤ 4 and 0 < c < 20 and M or M' an element among Al, Si, Ge, Ga, P, Zn, Sb;
e) mixed materials chosen from the mixtures between Li₂S and one of the compounds among Li₃PO₄, Li₃PO₄₋ₓN_{2x/3}, Li₄SiO₄₋ₓN_{2x/3}, Li₄GeO₄₋ₓN_{2x/3} with 0 < x < 4 or Li₃BO₃₋ₓN_{2x/3} with 0 < x < 3; the mixtures between Li₂S and/or B₂S₃ SiS₂, P₂S_{5,} GeS₂, Ga₂S₃ and a compound of the LiₐMO_{b} type, which may be a lithium silicate Li₄SiO₄, a lithium borate Li₃BO₃ or a lithium phosphate Li₃PO₄.

8. Method according to any one of claims 1 to 7, **characterized in that** the Ms bonding material comprises/consists of at least one polymer impregnated with a lithium salt, the polymer preferably being chosen from the group formed by polyethylene oxide, polyimides, vinylidene polyfluoride, polyacrylonitrile, polymethyl methacrylate, polysiloxanes, and lithium salt preferably being chosen from LiCl, LiBr, LiI, Li(ClO₄), Li(BF₄), Li(PF₆), Li(AsF₆), Li(CH₃CO₂), Li(CF₃SO₃), Li (CF₃SO₂)₂N, Li(CF₃SO₂)₃, Li(CF₃CO₂), Li(B(C₆H₅)₄), Li(SCN), Li(NO₃).

9. Method according to any one of claims 1 to 8, **characterized in that** it also includes a step of encapsulating the battery by depositing at least one encapsulation layer.

10. All-solid battery capable of being produced by a Method according to any one of claims 1 to 9.

11. Battery according to claim 9 10, **characterized in that** the anode and cathode current conductors are metal sheets, preferably made of aluminum or copper, optionally coated with a noble metal, or polymer sheets, preferably selected from the following polymers: polyethylene naphthalate (PEN), polyethylene terephthalate (PET), polypropylene (PP), Teflon® (PTFE), polyimide (PI) and more specifically Kapton®, optionally coated with a noble metal, or graphite sheets, optionally coated with a noble metal, said noble metal being preferably selected from the following metals: gold, platinum, palladium, vanadium, cobalt, nickel, manganese, niobium, tantalum, chromium, molybdenum, titanium, palladium, zirconium, tungsten or any alloy including at least one of these metals.

12. Battery according to any one of claims 10 or 11, **characterized in that** it includes at least one encapsulation layer, preferably a ceramic or glass-ceramic layer, and preferably a second encapsulation layer deposited on said first encapsulation layer, said second encapsulation layer being preferably made of silicone polymer.

13. Battery according to claims 12,, **characterized in that** said at least one encapsulation layer covers four of the six faces of said battery.

14. Battery according to any one of claims 10 to 13, **characterized in that** it includes terminals (35, 36) where the cathode and anode, respectively, current collectors are visible, said terminals preferably being covered with a nickel layer in contact with electrochemical cells, said nickel layer being covered with a tin layer.

15. Battery according to claim 14, **characterized in that** the anode connections and cathode connections are located on the opposite sides of the stack.
